(19) Europäisches Patentamt
European Patent Office
Office européen des brevets

(11) EP 2 049 603 B1

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **07786075.7**

(22) Anmeldetag: **16.07.2007**

(51) Int Cl.:
***C09C 3/12*** *(2006.01)* ***C09C 1/40*** *(2006.01)*

(86) Internationale Anmeldenummer:
**PCT/EP2007/006273**

(87) Internationale Veröffentlichungsnummer:
**WO 2008/017364 (14.02.2008 Gazette 2008/07)**

(54) **MIT POLYSILOXAN OBERFLÄCHENMODIFIZIERTE PARTIKEL UND HERSTELLUNGSVERFAHREN**

SURFACE-MODIFIED PARTICLES AND PRODUCTION METHOD

PARTICULE À SURFACE MODIFIÉE ET PROCÉDÉ DE FABRICATION

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **06.08.2006 DE 102006036950**
**07.08.2006 DE 102006037106**
**10.08.2006 DE 102006037596**

(43) Veröffentlichungstag der Anmeldung:
**22.04.2009 Patentblatt 2009/17**

(73) Patentinhaber: **BYK-Chemie GmbH**
**46483 Wesel (DE)**

(72) Erfinder:
- **NOLTE, Ulrich**
**47533 Kleve (DE)**
- **BUBAT, Alfred**
**46487 Wesel (DE)**
- **HAUBENNESTEL, Karlheinz**
**46487 Wesel (DE)**
- **SAWITOWSKI, Thomas**
**45133 Essen (DE)**

(74) Vertreter: **Von Rohr**
**Patentanwälte Partnerschaft**
**Rüttenscheider Straße 62**
**45130 Essen (DE)**

(56) Entgegenhaltungen:
**EP-A- 0 686 676** **EP-A- 1 304 361**
**EP-A- 1 614 705** **EP-A- 1 690 884**
**EP-A- 1 690 902**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 049 603 B1

## Beschreibung

Die vorliegende Erfindung betrifft oberflächenmodifizierte Partikel, insbesondere anorganisch basierte Partikel mit reaktiven bzw. reaktionsfähigen, insbesondere silanreaktiven bzw. siloxanreakiven Oberflächen, insbesondere hydroxylgruppenhaltigen Oberflächen, und/oder aus Metall- oder Halbmetalloxiden und/oder -hydroxiden bestehende oder diese enthaltende Partikel, vorzugsweise Nanopartikel, welche an ihrer Oberfläche ein polysiloxanbasiertes Modifizierungsmittel aufweisen, insbesondere an ihrer Oberfläche mit einem polysiloxanbasierten Modifizierungsmittel, vorzugsweise unter Bildung chemischer, insbesondere kovalenter Bindungen, umgesetzt worden sind, sowie ein entsprechendes Herstellungsverfahren für diese oberflächenmodifizierten Partikel.

Weiterhin betrifft die vorliegende Erfindung die Verwendung dieser oberflächenmodifizierten Partikel, insbesondere in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen, in Dichtungsmassen etc. Des weiteren betrifft die vorliegende Erfindung die Verwendung dieser oberflächenmodifizierten Partikel als Füllstoffe, insbesondere in den vorgenannten Systemen.

Außerdem betrifft die vorliegende Erfindung gleichermaßen Systeme, insbesondere Beschichtungsstoffe und Beschichtungssysteme, insbesondere Lacke, Farben und dergleichen, Kunststoffe, Schaumstoffe und Kosmetika, insbesondere Nagellacke, welche diese oberflächenmodifizierte Partikel enthalten. Schließlich sind Gegenstand der vorliegenden Erfindung auch neuartige Dispersionen, welche diesen oberflächenmodifizierten Partikel in einem Träger- oder Dispergiermedium enthalten.

Der Einsatz von Partikeln, insbesondere Nanopartikeln, ist in Beschichtungsund Dispersionssystemen dem Fachmann aus dem Stand der Technik grundsätzlich bekannt: So bietet der Einsatz von Nanopartikeln als Füllstoff für Beschichtungssysteme den Vorteil, daß ein Beschichtungsmaterial gewünschte Eigenschaften (wie z. B. eine erhöhte Kratzfestigkeit) erhält, ohne daß gleichzeitig negative Nebeneffekte in Kauf genommen werden müssen (wie z. B. mangelhafte Transparenz).

Es ist bekannt, daß der Einbau von Nanopartikeln in Beschichtungsstoffen beispielsweise zur Verbesserung der mechanischen Eigenschaften von Beschichtungssystemen, beispielsweise UV-härtbaren Beschichtungssystemen, führt.

So wird beispielsweise in der EP 1 236 765 A1 ein Verfahren zur Modifizierung von nanoskaligen Silikapartikeln mit Alkoxysilanen beschrieben, welche nach Einbau in ein entsprechendes UV-härtbares Beschichtungssystem eine Verbesserung der mechanischen Eigenschaften bewirken. In anderen hochgradig vernetzten Systemen, wie z. B. in Epoxidharzen, werden ebenso positive Effekte gefunden. Die Verbesserung der mechanischen Eigenschaften ist im wesentlichen auf die Bindung der Nanopartikel an die umgebende Matrix über chemische Bindungen zu erklären. Wegen der chemischen Anbindung der Partikel an die organische Matrix ist - in Abhängigkeit vom Füllgrad der Beschichtungsmaterialien mit solchen Nanopartikeln - eine zunehmende Versprödung zu beobachten, welche je nach Applikationsgebiet für die Beschichtung abträglich ist. Sofern die bekannten nanoskaligen Füllstoffe auf Basis von Silika nicht an die organische Matrix angebunden werden, ist der gewünschte Effekt der Verbesserung der mechanischen Eigenschaften in UV-härtbaren bzw. epoxidbasierten Beschichtungssystemen bei weitem nicht so ausgeprägt.

Neben Silikananopartikeln lassen sich auch andere Nanopartikelsorten in Beschichtungsmaterialien einbauen, um deren mechanische Eigenschaften zu optimieren. Durch Zugabe von beispielsweise nanoskaligem Aluminiumoxid (z. B. die Marktprodukte NANOBYK-3600 bzw. NANOBYK-3601 der BYK-Chemie GmbH, Wesel, Deutschland) in UV-härtbare Beschichtungssysteme wird eine deutliche Verbesserung der Abriebfestigkeit ohne Einfluß auf die Flexibilität des Systems erreicht. Das Aluminiumoxid ist in diesem Fall nicht an die organische Matrix des Beschichtungssystems angebunden. Die Stabilisierung der Nanopartikel in der Lackmatrix erfolgt über handelsübliche Netz- und Dispergieradditive.

Beschichtungssysteme, die nicht UV-härtbar sind oder auf Epoxidsystemen basieren, können gleichermaßen durch Zugabe von Nanopartikeln in ihrer Kratzfestigkeit optimiert werden.

So ist in der US 6 593 417 A ein Verfahren beschrieben, bei dem Silikapartikel in Kombination mit einem Polysiloxan in einem Zweikomponenten-Polyurethanlack eingesetzt werden. Das Polysiloxan verfügt über reaktive Gruppen, welche mit der Lackmatrix über kovalente Gruppen anbinden können. Die Anbindung des Polysiloxans an die Nanopartikel erfolgt lediglich über koordinative Wechselwirkungen. Die spezielle Kombination aus Nanopartikeln und Polysiloxan führt dazu, daß sich die Nanopartikel zur Grenzfläche Beschichtung/Luft orientieren und dort zu einer mechanischen Verstärkung führen, welche sich in einer erhöhten Kratzbeständigkeit zeigt. Nachteilig ist die Orientierung der Nanopartikel zur Grenzfläche Beschichtung/Luft, da durch Beanspruchung der Beschichtung durch Witterungs- und Gebrauchseinflüsse die oberste Schicht zuerst abgetragen wird und damit die Wirksamkeit im Laufe der Zeit nachläßt.

Die US 5 853 809 A lehrt, daß eine Verbesserung der Kratzbeständigkeit von Beschichtungssystemen, wie sie z. B. in Automobildecklacken eingesetzt werden, durch den Einbau von modifizierten Nanopartikeln erfolgen kann. Die Modifikation der Nanopartikel erfolgt beispielsweise durch ein funktionelles Polyurethan in der Weise, daß das Polymer mit der Nanopartikeloberfläche eine kovalente Bindung eingeht. Weiterhin ist die polymere Hülle der auf diese Weise

modifizierten Nanopartikel in der Lage, mit dem Bindemittelsystem des Beschichtungsmaterials kovalente Bindungen einzugehen. Aussagen über die Versprödung des Lacksystems, insbesondere bei hohen Nanopartikelgehalten, werden aber nicht getroffen.

Die aus dem Stand der Technik bekannten modifizierten Nanopartikel verbessern zwar die Kratzfestigkeit der Lacke, in denen sie eingesetzt werden; jedoch ist insbesondere bei nicht strahlenhärtenden, insbesondere UV-vernetzenden, Systemen die Anbindung der Nanopartikel über die Modifizierung an die Lackmatrix äußerst kritisch zu bewerten: Durch die Anbindung der Nanopartikel an die Lackmatrix wird die Netzwerkdichte des ausgehärteten Lackfilms erhöht, was zu einer erhöhten Sprödigkeit des Lackfilms fiihrt. Aus der DE 195 40 623 A1 sind nanoskalige Füllstoffteilchen bekannt, die in einer polymeren Matrix dispergiert werden. Als Oberflächenmodifikatoren werden unter anderem Silane, insbesondere Organoalkoxysilane, beschrieben. Die Oberflächenmodifikatoren sind niedrigmolekulare Verbindungen mit einem Molekulargewicht, das nicht größer als 500 Dalton ist. Die funktionellen Gruppen, welche solche Verbindungen tragen müssen, richten sich nach den Oberflächengruppen der nanoskaligen Teilchen und nach der gewünschten Wechselwirkung mit der Matrix. Die modifizierten Teilchen weisen also eine Affinität zur Matrix auf.

Die EP 1 304 361 A1 betrifft Kieselsäuren mit homogener Silyliermittelschicht an der Kieselsäureoberfläche, die hydrophobe Eigenschaften besitzen und eine mittlere Primärteilchen-Partikelgröße kleiner als 100 nm aufweisen, wobei diese Primärteilchen nicht isoliert in der Kieselsäure existieren, sondern Bestandteile größerer Aggregate (Definition, nach DIN 53206) sind, die einen Durchmesser von 100 bis 1.000 nm aufweisen und Agglomerate (Definition nach DIN 53206) aufbauen, die in Abhängigkeit von der äußeren Scherbelastung Größen von 100 bis 500 μm aufweisen. Die oberflächenmodifizierten Kieselsäuren werden als Additive zur Steuerung der Rheologie von flüssigen und pulverförmigen Systemen verwendet, insbesondere in lösemittelfreien, lösemittelhaltigen, wasserverdünnbaren, filmbildenden Anstrichmitteln, gummiartigen bis harten Beschichtungen, Klebstoffen, Versiegelungs- und Vergußmassen sowie anderen vergleichbaren Systemen. Wie z. B. Epoxidsystemen, Polyurethansystemen (PUR), Vinylesterharzen, ungesättigten Polyesterharzen, wasserlöslichen oder wasserdispergierbaren Harzsystemen, lösemittelarmen Harzsystemen und lösemittelfreien Harzen, die in Pulverform z. B. Beschichtungsstoffe appliziert werden können.

Die EP 0 686 676 A1 betrifft oberflächenmodifizierte Kieselsäuren, die mit einem Gemisch aus OH-endständigem Polydimethylsiloxan und Dimethyldichlorsilan oberflächenmodifiziert worden sind.

Die EP 1 614 705 A1 betrifft die Verwendung von polyestermodifizierten Polysiloxanen und deren Verwendung als Additive für Thermoplaste, Formmassen und Lacke. Die polyestermodifizierten Polysiloxane verbessern die Eigenschaften von Lacken und Thermoplasten, insbesondere deren Kratzfestigkeit.

Die EP 1 690 902 A2 betrifft oberflächenmodifizierte, aus Metall- oder Halbmetalloxiden oder -hydroxiden bestehende Nanopartikel, die auf ihrer Oberfläche mit einem polysiloxanbasierten Modifizierungsmittel unter Bildung von kovalenten Bindungen umgesetzt worden sind, sowie ein Verfahren zur Herstellung dieser Nanopartikel und deren Verwendung als Füllstoffe in Beschichtungsstoffen, Kunststoffen, Schaumstoffen und Nagellacken und darüber hinaus Dispersionen, welche diese Nanopartikel enthalten.

Die EP 1 690 884 A1 betrifft organosilanmodifizierte Polysiloxane und deren Verwendung zur Oberflächenmodifizierung, insbesondere zur Beschichtung von Füllstoffen oder Pigmenten.

Der vorliegenden Erfindung liegt daher die Aufgabe zugrunde, oberflächenmodifizierte Partikel, insbesondere nanoskalige oberflächenmodifizierte Partikel, bereitzustellen, welche sich insbesondere zum Einsatz in den vorgenannten Systemen eignen und die mit den herkömmlichen Partikeln verbundenen Nachteile zumindest weitgehend vermeiden oder aber wenigstens abschwächen, sowie ein entsprechendes Herstellungsverfahren für derartige Partikel anzugeben.

Eine weitere Aufgabe der vorliegenden Erfindung ist darin zu sehen, eine neue, effiziente Oberflächenmodifikation von Partikel der eingangs genannten Art, insbesondere Nanopartikeln, bereitzustellen.

Des weiteren liegt der vorliegenden Erfindung die Aufgabe zugrunde, die Partikel, insbesondere Nanopartikel, als stabile Dispersion in geeigneten Dispergier- bzw. Trägermedien (z. B. Lösemitteln, Wasser etc.), wie sie beispielsweise in der Lackindustrie eingesetzt werden, zur Verfügung zu stellen. Diese neuen Dispersionen sollten auch bei hohem Partikelgehalt über eine hohe Lagerstabilität verfügen. Die Neigung dieser Partikeldispersionen, insbesondere Nanopartikeldispersionen, zur Sedimentation bzw. zur Gelbildung sollte vorteilhafterweise ausgeschlossen sein. Weiterhin sollten die Dispersionen, insbesondere wenn sie zur Herstellung von Beschichtungsmaterialien eingesetzt werden, vorteilhafterweise unter anderem eine Erhöhung der Kratzfestigkeit der ausgehärteten Beschichtungen bewirken. Eine etwaige Reaktivität der neuen oberflächenmodifizierten Partikel, insbesondere Nanopartikel, gegenüber den Systemen, in denen sie eingesetzt werden, insbesondere gegenüber den Bindemittelkomponenten des eingesetzten Lacksystems, sollte möglichst minimiert werden, vorzugsweise um die Tendenz zur Versprödung des ausgehärteren Lackfilms zu vermeiden. Insbesondere soll die Oberflächenmodifizierung gegenüber den Systemen, in denen die oberflächenmodifizierten Partikel zum Einsatz kommen, beispielsweise gegenüber einer Lackmatrix, möglichst inert bzw. möglichst wenig reaktiv sein.

Schließlich liegt eine weitere Aufgabe der vorliegenden Erfindung in der Bereitstellung eines Herstellungsverfahrens für die neuen oberflächenmodifizierten Partikel, insbesondere Nanopartikel, welches sich in einfacher Weise durchführen läßt und breit variiert werden kann, insbesondere um auf diese Weise neue oberflächenmodifizierte Partikel,

insbesondere Nanopartikel, und deren Dispersionen für unterschiedliche Anwendungszwecke maßgeschneidert zur Verfügung zu stellen.

Die Anmelderin hat nun überraschenderweise gefunden, daß die zuvor geschilderte Problemstellung in effizienter Weise gelöst werden, wenn man Partikel, insbesondere anorganisch basierte Partikel mit reaktiven bzw. reaktionsfähigen, vorzugsweise silanreaktiven bzw. siloxanreakiven Gruppen, insbesondere Hydroxylgruppen, an ihrer Oberfläche und/oder aus Metall- und/oder Halbmetalloxiden, -hydroxiden und/oder -oxidhydroxiden bestehende oder diese enthaltende Partikel, vorzugsweise Nanopartikel, mit einem polysiloxanbasierten Modifizierungsmittel, vorzugsweise unter Bildung chemischer, insbesondere kovalenter Bindungen, umsetzt, welches ein höheres Molekulargewicht aufweisen, vorzugsweise linear aufgebaut sind, gegenüber einer umgebenden Matrix inert ist und mit modifizierenden, insbesondere polaren Gruppen ausgerüstet ist. Auf diese Weise läßt sich überraschenderweise die Dispergierbarkeit der Partikel verbessern, die Oberflächenmodifizierung gegenüber bekannten Systemen verbessern und die Polaritäten verbessert steuern.

Zur Lösung des zuvor geschilderten Problems schlägt die vorliegende Erfindung somit oberflächenmodifizierte Partikel nach Anspruch 1 vor. Weitere, vorteilhafte Eigenschaften sind Gegenstand der betreffenden abhängigen Ansprüche 2 bis 11.

Weiterer Gegenstand der vorliegenden Erfindung ist ein Verfahren zur Herstellung der erfindungsgemäßen oberflächenmodifizierten Partikel gemäß Anspruch 13.

Wiederum ein weiterer Gegenstand der vorliegenden Erfindung ist die Verwendung der erfindungsgemäßen oberflächenmodifizierten Partikel als Füllstoffe gemäß Anspruch 14.

Ein wiederum weiterer Gegenstand der vorliegenden Erfindung ist die Verwendung der erfindungsgemäßen oberflächenmodifizierten Partikel in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen und in Dichtungsmassen gemäß Anspruch 15.

Des weiteren sind Gegenstand der vorliegenden Erfindung gleichermaßen Dispersionen, welche die erfindungsgemäßen oberflächenmodifizierten Partikel in einem Träger- oder Dispergiermedium enthalten, gemäß Anspruch 16.

Schließlich sind ein wiederum weiterer Gegenstand der vorliegenden Erfindung Beschichtungsstoffe und Beschichtungssysteme, insbesondere Lacke, Farben und dergleichen, Kunststoffe, Schaumstoffe, Kosmetika, insbesondere Nagellacke, Klebstoffe sowie Dichtungsmassen, welche die erfindungsgemäßen oberflächenmodifizierten Partikel enthalten, gemäß Anspruch 17.

Die vorliegende Erfindung wird nachfolgend im Detail anhand der erfindungsgemäßen oberflächenmodifizierten Partikel, insbesondere Nanopartikel, erläutert werden. Die diesbezüglichen Ausführungen gelten für die übrigen Aspekte bzw. Gegenstände der vorliegenden Erfindung - erfindungsgemäßes Herstellverfahren, erfindungsgemäße Verwendung, erfindungsgemäße Dispersionen etc. - entsprechend, so daß zur Vermeidung unnötiger Wiederholungen auch für die anderen Aspekte bzw. Gegenstände der vorliegenden Erfindung hierauf verwiesen werden kann.

Gegenstand der vorliegenden Erfindung - gemäß einem ersten Aspekt der vorliegenden Erfindung - sind somit oberflächenmodifizierte Partikel, insbesondere anorganisch basierte Partikel mit reaktiven bzw. reaktionsfähigen, vorzugsweise silanreaktiven bzw. siloxanreakiven Gruppen, insbesondere mit Hydroxylgruppen, an ihrer Oberfläche und/oder aus Metall- und/oder Halbmetalloxiden, -hydroxiden und/oder -oxidhydroxiden bestehende oder diese enthaltende Partikel, vorzugsweise Nanopartikel, wobei die Partikel an ihrer Oberfläche ein polysiloxanbasiertes Modifizierungsmittel aufweisen, insbesondere an ihrer Oberfläche mit einem polysiloxanbasierten Modifizierungsmittel, vorzugsweise unter Bildung chemischer, insbesondere kovalenter Bindungen, umgesetzt worden sind, wobei die oberflächenmodifizierten Partikel dadurch gekennzeichnet sind, daß das Modifizierungsmittel ein Polysiloxan der folgenden allgemeinen Summenformel

$$(R^1_x\ R^2_{3-x}\ Si\ R^3)_y\ R^4$$

ist, wobei in der Summenformel bedeuten:

- $x$ = 0 bis 2 einschließlich der Grenzen, insbesondere $x$ = 0;
- $y$ = 1 bis 10 einschließlich der Grenzen, insbesondere $y$ = 2 bis 5;
- $R^1$ = einbindiger organischer Rest, bevorzugt mit 1 bis 18 Kohlenstoffatomen, insbesondere 1 bis 10 Kohlenstoffatomen, vorzugsweise 1 bis 3 Kohlenstoffatomen;
- $R^2$ = OH-Gruppe oder hydrolysierbare Gruppe enthaltend oder bestehend aus:
    - einer linearen oder verzweigten oder cyclischen Alkoxygruppe mit 1 bis 6 Kohlenstoffatomen, insbesondere 1 bis 2 Kohlenstoffatomen,
    - einem Halogenatom, insbesondere Chloratom oder

- einem Carbonsäurerest mit 1 bis 4 Kohlenstoffatomen, insbesondere 2 Kohlenstoffatomen;

• $R^3$ = Sauerstoff oder mindestens zweibindiger organischer Rest enthaltend oder bestehend aus:

- einem linearen oder verzweigten, vorzugsweise linearen Alkylenrest, insbesondere mit 1 bis 8 Kohlenstoffatomen,
- einem Alkylenether,
- einem Alkylenthioether,
- einem Alkylenpolyether, bevorzugt auf Basis von Ethylenoxid, Propylenoxid, Butylenoxid oder Styroloxid oder Mischungen der Oxide oder auf Basis eines statistischen oder Blockpolyethers,
- einem Arylenpolyether,
- einem Alkylenpolyester oder
- einer organischen aliphatischen oder aromatischen oder arylaliphatischen Gruppe, insbesondere wobei die Gruppe neben Ester- und/oder Ethergruppen auch Urethan- und/oder Harnstoffgruppen enthält;

• $R^4$ = ein- oder mehrbindiger Rest enthaltend oder bestehend aus einem Polydialkylsiloxan mit 4 bis 200 Si-Einheiten und mit $C_1$-$C_{18}$-Alkylgruppen an den Siliciumatomen, wobei die $C_1$-$C_{18}$-Alkylgruppen teilweise und jeweils unabhängig voneinander durch eine oder mehrere der folgenden modifizierenden Gruppen (G), vorzugsweise polaren modifizierenden Gruppen (G), ersetzt bzw. substituiert sind (d. h. mit anderen Worten gegen diese Gruppe ausgetauscht sind, insbesondere mittels Pfropfung), ausgewählt aus den nachfolgend unter (i) bis (iv) aufgeführten modifizierenden Gruppen (G1) bis (G4):

(i) (Poly-)Ethergruppen enthaltende Gruppe (G1), insbesondere auf Basis mindestens eines Alkylenoxids,

(ii) Polyestergruppen enthaltende Gruppe (G2),

(iii) Arylalkylgruppen enthaltende Gruppe (G3),

(iv) perfluorierte Alkylgruppen enthaltende Gruppe (G4).

Vorteilhafte Ausgestaltungen der vorliegenden Erfindung ergeben sich aus den Unteransprüchen und Nebenansprüchen.

Eine maßgebliche Besonderheit der vorliegenden Erfindung muß in der vorzugsweise polaren Modifizierung der Gruppe $R^4$ gesehen werden: Wie zuvor geschildert, sind die Alkylgruppen des Polydialkylsiloxanrests (d. h. die $C_1$-$C_{18}$-Alkylgruppen an den Siliciumatomen) teilweise und unabhängig voneinander durch eine modifizierenden, vorzugsweise polare Gruppe (G) ausgetauscht bzw. ersetzt (z. B. mittels Pfropfung). Überraschenderweise wird hierdurch einerseits die Dispergierbarkeit der erfindungsgemäßen Partikel verbessert. Andererseits läßt sich auf diese Weise die Polarität gezielt steuern, so daß auf diese Weise auch die Anwendungseigenschaften maßgeschneidert werden können. Schließlich wird auf diese Weise die Oberflächenmodifizierung entscheidend verbessert, insbesondere im Hinblick auf die angestrebten Anwendungseigenschaften (z. B. Kratzfestigkeit von Lacken etc.). Die modifizierenden Gruppen (G) für die Gruppe $R^4$ sind derart auszuwählen, daß sie im Hinblick auf die Anwendungssysteme bzw. Anwendungsmatrix und deren Inhaltsstoffe (z. B. Lackmatrix) vorteilhafterweise kompatibel, insbesondere inert oder allenfalls möglichst geringfügig reaktiv, sind. Die vorzugsweise polaren Modifizierungsgruppen (G) lassen sich beispielsweise durch Pfropfung in den Rest $R^4$ (z. B. mittels Hydrosilylierungs- bzw. Additionsreaktion oder mittels Kondensationsreaktion) ausgehend von kommerziell verfügbaren Ausgangsprodukten einfiihren; dies ist dem Fachmann als solches bekannt und wird nachfolgend auch noch näher beschrieben.

Besonders bevorzugte Ausführungsformen in bezug auf die Auswahl der Modifizierungsgruppen (G) sind Gegenstand der Ansprüche 2 bis 5.

Eine besondere Ausführungsform der erfindungsgemäßen oberflächenmodifizierten Partikel ist Gegenstand von Anspruch 6.

Eine besondere Leistungssteigerung der erfindungsgemäßen Partikel läßt sich durch zusätzliche Oberflächenmodifizierungen mit Silanen gemäß dem Gegenstand der Ansprüche 11 und/oder 12 erreichen.

Die Teilchengröße der erfindungsgemäßen Partikel, insbesondere Nanopartikel, liegt im Bereich von 0,1 bis 1.000 nm, insbesondere 0,5 bis 500 nm, vorzugsweise 1 bis 350 nm, weiter bevorzugt 2 bis 200 nm, besonders bevorzugt unterhalb 100 nm, ganz besonders bevorzugt unterhalb von 50 nm. Die Teilchengrößen können erfindungsgemäß mittels Transmissionselektronenmikroskopie bestimmt werden.

Als Nanopartikel werden erfindungsgemäß feinteilige Feststoffe mit einer Teilchengröße im vorgenannten Teilchengrößenbereich (d. h. im Bereich von 0,1 bis 1.000 nm, insbesondere 0,5 bis 500 nm, vorzugsweise 1 bis 350 nm,

weiter bevorzugt 2 bis 200 nm, besonders bevorzugt unterhalb 100 nm, ganz besonders bevorzugt unterhalb von 50 nm) bezeichnet. Wie zuvor erwähnt, kann die Bestimmung der Partikelgrößen im Rahmen der vorliegenden Erfindung insbesondere mittels Transmissionselektronenmikroskopie (TEM) erfolgen. Zur Bestimmung der Partikelgröße der erfindungsgemäßen Partikel bzw. Nanopartikel kann eine TEM-Untersuchung durchgeführt werden: Die entsprechenden Nanopartikeldispersionen werden zu diesem Zweck üblicherweise verdünnt, auf ein Kohlenstoffgrid (insbesondere 600 Mesh Kohlenstoffilm) aufgetragen und getrocknet; die Analyse erfolgt dann jeweils beispielsweise mit einem LEO 912-Transmissionselektronenmikroskop. Die Auswertung der TEM-Bilder wird z.B. digital mit einer Software der Firma analySIS Soft Imaging System GmbH durchgeführt. Der Partikeldurchmesser werden im allgemeinen jeweils für mindestens 1000 Partikel errechnet, indem die gemessene Fläche der Partikel bzw. Nanopartikel mit einem flächengleichen Kreis korreliert wird. Anschließend wird der Mittelwert aus den Ergebnissen gebildet.

Die beanspruchten Partikel, insbesondere Nanopartikel, sind im allgemeinen anorganische Partikel, an deren Oberflächen reaktive bzw. reaktionsfähige, vorzugsweise silanreaktive bzw. siloxanreakive Gruppen, insbesondere Hydroxylgruppen, befindlich bzw. angeordnet sind, welche für die chemische, vorzugsweise kovalente Anbindung des Modifizierungsmittels benötigt werden; d. h. die an der Oberfläche der zu modifizierenden Partikel befindlichen reaktiven bzw. reaktionsfähigen Gruppen müssen imstande sein, mit dem Modifizierungsmittel zu reagieren. Neben Hydroxylgruppen, welche erfindungsgemäß bevorzugt sind, kommen auch andere silan- und/oder siloxanreaktive Gruppen in Betracht, z. B. Halogene (wie z. B. Fluor oder Chlor) oder Halogenatome enthaltende Gruppen etc.

Insbesondere bestehen die Partikel aus mindestens einem Metall- und/oder Halbmetalloxid, -oxidhydroxid und/oder -hydroxid oder enthalten dieses; auch kommen Mischungen oder Kombinationen verschiedener Metall- und/oder Halbmetalloxide, -oxidhydroxide und/oder -hydroxide in Betracht (z. B. Partikel, die aus gemischten Metall- und/ oder Halbmetalloxiden, -oxidhydroxiden bzw. -hydroxiden bestehen). Beispielsweise lassen sich die Oxide, Hydroxide und/ oder Oxidhydroxide des Aluminiums, Siliziums, Zinks und/oder Titans usw. zur Herstellung modifizierter Partikel bzw. Nanopartikel heranziehen. Weiterhin lassen sich ebenso Oxidhydroxide, wie beispielsweise Aluminiumoxidhydröxid, nach dem angegebenen Verfahren modifizieren. Gleichermaßen geeignet sind auch andere anorganische Materialien, insbesondere anorganische Salze, wie Phosphate, Sulfate, Halogenide, Carbonate etc. gegebenenfalls in Mischung den vorgenannten Metall- und/oder Halbmetalloxiden, -oxidhydroxiden und/oder -hydroxiden. Erfindungsgemäß bevorzugt sind jedoch Metall- und/oder Halbmetalloxide, -oxidhydroxide und/oder -hydroxide der vorgenannten Art.

Der Herstellprozess der erfindungsgemäß eingesetzten Partikel, insbesondere der oxidischen bzw. hydroxidischen bzw. oxidhydroxidischen Partikel, insbesondere Nanopartikel, kann über die unterschiedlichsten Verfahren, wie z. B. beispielsweise Ionenaustauschprozesse, Plasmaprozesse, Sol/Gel-Verfahren, Ausfällung, Zerkleinerung (z.B. durch Vermahlung) oder Flammhydrolyse usw., erfolgen; es ist erfindungsgemäß unerheblich, nach welchem Verfahren die oxidischen bzw. hydroxidischen Partikel hergestellt werden, d. h. erfindungsgemäß lassen sich beliebig hergestellte Partikel der vorgenannten Art oberflächenmodifizieren.

Die gefundenen, neuartigen oberflächenmodifizierten Partikel, insbesondere Nanopartikel, werden im Rahmen der vorliegenden Erfindung auch als erfindungsgemäße Partikel bzw. als erfindungsgemäße Nanopartikel bezeichnet. Die neuen Dispersionen der erfindungsgemäßen Partikel bzw. Nanopartikel werden im Rahmen der vorliegenden Erfindung auch als erfindungsgemäße Dispersionen bezeichnet.

In Kenntnis des Standes der Technik war es vollkommen überraschend und für den Fachmann nicht vorhersehbar, daß die zuvor geschilderten Aufgaben, welche der vorliegenden Erfindung zugrundeliegen, durch die erfindungsgemäßen Partikel, durch das erfindungsgemäße Herstellverfahren, durch die erfindungsgemäßen Dispersionen und die übrigen, zuvor beschriebenen erfindungsgemäßen Gegenstände gelöst werden konnten.

Die Herstellung der erfindungsgemäßen Partikel und der erfindungsgemäßen Dispersionen läßt sich in einfacher Weise ohne den Einsatz aufwendiger Methoden oder Verfahren durchführen.

Die erfindungsgemäßen Nanopartikel eignen sich beispielsweise für die Herstellung von z. B. thermisch härtbaren, strahlenhärtenden oder Zweikomponenten-Beschichtungssystemen, von Thermoplasten, von Schäumen etc.

Durch die Bereitstellung der erfindungsgemäßen Dispersionen ist es gelungen, ein leicht handzuhabendes Partikelkonzentrat, insbesondere Nanopartikelkonzentrat, zur Verfügung zu stellen, welches sich z. B. einfach zu den unterschiedlichsten Lacksystemen zudosieren läßt, um den gewünschten Effekt beispielsweise einer verbesserten mechanischen Beständigkeit, wie z. B. Kratzbeständigkeit, zu erzielen.

Neben der einfachen Dosierbarkeit der erfindungsgemäßen Dispersionen ist außerdem eine gute Stabilität der Dispersionen gegen Absetzen und Gelbildung, insbesondere auch bei hohen Feststoffgehalten, festzustellen.

Die erfindungsgemäßen Partikel, insbesondere Nanopartikel, sind vorteilhafterweise mit modifizierenden Gruppen derart belegt, daß gegebenenfalls noch vorhandene, funktionelle reaktive Gruppen auf der Partikeloberfläche soweit abgeschirmt sind, daß eine Reaktion dieser Gruppen mit anderen funktionellen Gruppen aus sterischen Gründen nicht mehr stattfindet.

Die Oberfläche der erfindungsgemäßen Partikel, insbesondere Nanopartikel, ist mit mindestens einer Sorte modifizierender Gruppen bedeckt. Der Aufbau der modifizierenden Gruppen ist im folgenden dargestellt:

Die modifizierende Gruppe ist chemisch, vorzugsweise kovalent, an die Partikeloberfläche angebunden. Die modifizierende Gruppe verfügt über verschiedene Strukturelemente, die mit der Partikeloberfläche mindestens jeweils eine chemische, insbesondere kovalente Bindung aufbauen können. Weiterhin besteht die modifizierende Gruppe aus einem abstandshaltenden Teil, der keine Reaktionen mit der Partikeloberfläche eingehen kann und ebenso weitgehend inert gegenüber der Matrix (z. B. anderen Lackbestandteilen, Kunststoffbestandteilen, etc.) ist. Der abstandshaltende Teil der modifizierenden Gruppe kann z. B. aus einem Polymer beispielsweise mit einem zahlenmittleren Molekulargewicht beispielsweise im Bereich von 300 bis 5.000 Dalton gebildet

sein. Dabei ist die Struktur des abstandshaltenden Restes vorzugsweise linear aufgebaut.

Dies bedeutet, daß das Modifizierungsmittel aus mindestens einer oder mehreren gegenüber der Partikeloberfläche reaktiven Ankergruppen sowie einem Polydialkylsiloxan (= Bestandteil des oben definierten Rests $R^4$) aufgebaut ist. Die Ankergruppen mit den verbindenden Strukturen können an den Enden des Polydialkylsiloxans angebracht sein als auch als Seitengruppe am Polydialkylsiloxan vorliegen.

Die Struktur des erfindungsgemäß eingesetzten Modifizierungsmittels läßt sich schematisch folgendermaßen an einem Beispiel darstellen, wobei im dargestellten Beispiel drei unterschiedliche polare Substituenten bzw. modifizierende Gruppen (G) für den Rest $R^4$ (= Polydialkylsiloxan) in der Darstellung gewählt wurde (Bezüglich der Bedeutung der Substituenten kann auf die obigen Ausführungen sowie auf die Patentansprüche verwiesen werden.):

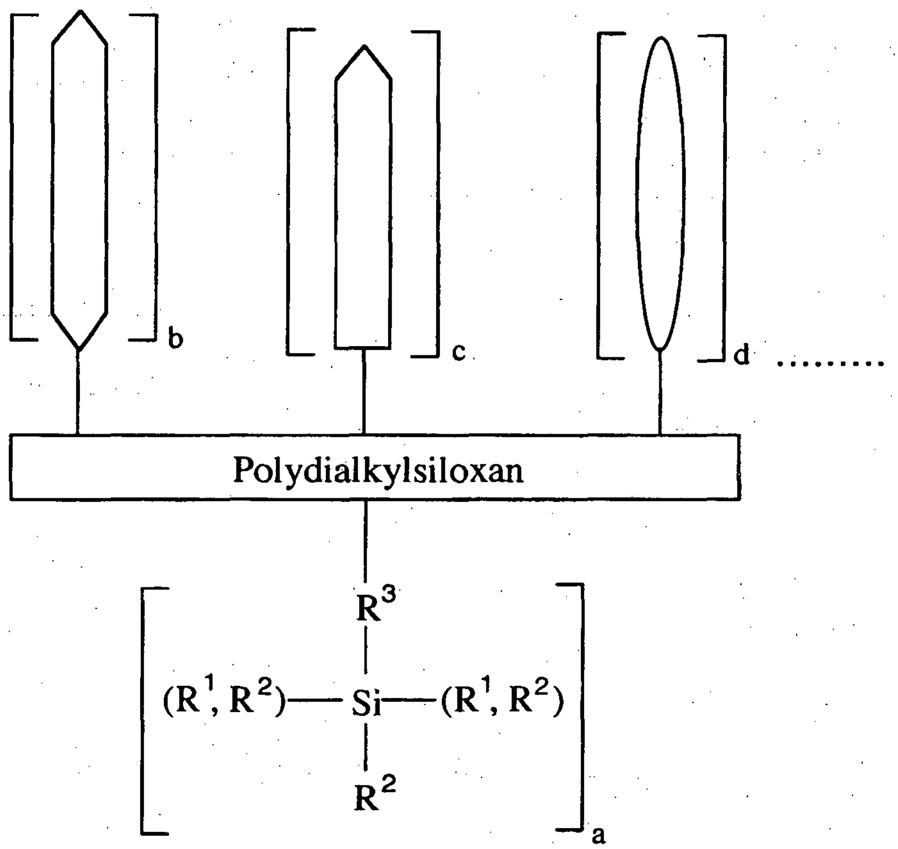

Der Index a beschreibt die Anzahl der Ankergruppen, und die Indices b, c, d ... beschreiben die Anzahl der vorzugsweise polaren Substituenten bzw. modifizierenden Gruppen (G) in der Seitengruppe des Polydialkylsiloxans $R^4$, wobei gilt:

$$a \geq 1$$

$$b + c + d + \ldots \geq 1$$

Wie zuvor beschrieben, kann zusätzlich eine Oberflächenmodifizierung der Partikel mit Silanen gemäß Anspruch 11 und/oder 12 vorgenommen werden, welche im allgemeinen gleichermaßen über mindestens eine chemische, insbesondere kovalente Bindung an die Partikeloberfläche angebunden sind und vorteilhafterweise über einen oder mehrere abstandshaltende Teile verfügen. Für diesbezügliche Einzelheiten kann auf die Patentansprüche verwiesen werden.

Die Herstellung der erfindungsgemäßen Nanopartikel kann durch einfaches Vermischen des Modifizierungsmittels mit einem partikulären, insbesondere nanopartikulären, Pulver erfolgen. Dabei ist sicherzustellen, daß vorzugsweise eine chemische, insbesondere kovalente Anbindung des Modifizierungsmittels an die Oberfläche der Nanopartikel stattfindet. Die Bedingungen hierfür richten sich nach der Reaktivität der miteinander umzusetzenden funktionellen Gruppen und können vom Fachmann leicht ermittelt werden. Wenn nicht bereits bei Raumtemperatur eine Reaktion stattfindet, kann beispielsweise durch Tempern der Mischung aus nanopartikulärem Pulver und Modifizierungsmittel bei einer Temperatur von ca. 80 °C über einen Zeitraum von ca. einer Stunde eine chemische, insbesondere kovalente Anbindung des Modifizierungsmittels erreicht werden.

Die Herstellung des erfindungsgemäß eingesetzten Modifizierungsmittels ist dem Fachmann als solches geläufig und kann beispielsweise auf folgendem Wege erfolgen:

> Ausgehend von kommerziell erhältlichen offenkettigen und cyclischen Polydimethylsiloxanen und Si-H-funktionellen Polydimethylsiloxanen lassen sich über eine Äquilibrierungsreaktion (wie sie z. B. bei Noll, "Chemie und Technologie der Silicone", Wiley/VCH Weinheim, 1984, beschrieben ist) Si-H-funktionelle Polydimethylsiloxane herstellen, die in weiteren Schritten zum erfindungsgemäß eingesetzten Modifizierungsreagenz umgesetzt werden können. Im Rahmen der vorliegenden Erfindung muß die Anzahl der Si-H-Gruppen in dem Si-H-funktionellen Polydimethylsiloxan mindestens zwei betragen (Es wird mindestens eine Si-H-Gruppe zur Anbindung der Ankergruppe $(R^1_x R^2_{3-x} Si R^3)_y$ und mindestens eine Si-H-Gruppe zur Anbindung der polaren Modifizierung benötigt.).

Durch bekannte Verfahren lassen sich ungesättigte Verbindungen, wie beispielsweise 1-Octen, 1-Decen, 1-Dodecen, 1-Hexadecen und 1-Octadecen, an Si-H-haltige Polysiloxane mittels geeigneter Katalysatoren, wie z. B. Hexachloroplatinsäure, Speyers Katalysator, Platindivinyltetramethyldisiloxan-Komplex oder in Gegenwart von auf Trägermaterialien aufgebrachten Platinverbindungen, anlagern; die Hydrosilylierungsbedingungen sind allgemein bekannt, vorzugsweise liegt die Hydrosilylierungstemperatur zwischen Raumtemperatur und 200 °C, vorzugsweise 50 und 150 °C, je nach eingesetztem Katalysator.

Analog zur Anlagerung von Alkenen können alternativ aber auch andere Verbindungen mit ungesättigten Gruppen im Sinne einer Hydrosilylierung an Si-H-Gruppen addiert werden. Beispielsweise können Polyalkylenglykolallylalkylether (z. B. Polyglykol AM-Typen, Clariant GmbH) oder Trialkoxyvinylsilan (z. B. Dynasylan VTMO oder Dynasylan VTEO, Degussa AG) an Si-H-Gruppen addiert werden.

Weiterhin können zum Beispiel Additionsverbindungen von Lactonen, wie z. B. ε-Caprolacton und/oder δ-Valerolacton, an ethylenisch ungesättigte Alkohole, wie z. B. Allylalkohol, Hexenol, Allylglykol oder Vinylhydroxybutylether, an Si-H-Gruppen addiert werden. Diese Verbindungen können beispielsweise alkyliert oder acyliert sein.

Neben der Möglichkeit der Addition von ethylenisch ungesättigten Verbindungen an Si-H-Gruppen bietet sich weiterhin die Möglichkeit, hydroxyfunktionelle Verbindungen über eine Kondensationsreaktion an Si-H-funktionelle Polydimethylsiloxane anzukoppeln. Durch dieses bekannte Verfahren lassen sich beispielsweise Polyalkylenglykolmonoalkylether (z.B. Butylpolyethylenglykol) an Si-H-Gruppen unter Abspaltung von Wasserstoffgas kondensieren. Als Katalysator für diese Reaktion läßt sich beispielsweise Zinkacetylacetonat einsetzen. In analoger Form können auch andere Substituenten, wie beispielsweise estergruppenhaltige Gruppen in das Polydimethylsiloxan, eingeführt werden.

Zur Modifizierung von Si-H-funktionellen Polydimethylsiloxanen können Hydrosilylierungsreaktionen und Kondensationsreaktionen durchgeführt werden. Es ist ebenso möglich, daß ein kombiniertes Verfahren eingesetzt wird, um das Modifizierungsmittel herzustellen.

Im Unterschied zur Hydrosilylierung (Bildung einer Si-C-Bindung) entsteht durch die Kondensationsreaktion eine Si-O-Verknüpfung.

Auf diese Weise kann der Rest $R^4$ durch die polaren Gruppen (G) modifziert werden, wie sie beispielsweise unter (i) bis (iv) von Anspruch 1 aufgeführt sind.

Die erfindungsgemäßen Partikel, insbesondere Nanopartikel, können beispielsweise direkt in Lacken und Kunststoffen angewendet werden. Die erfindungsgemäßen Partikel, insbesondere Nanopartikel, eignen sich jedoch besonders auch zur Herstellung von Dispersionen z. B. in Wasser, Lösemitteln, Weichmachern, Wachsen, Mineralölen und Reaktiwerdünnern und anderen Trägermedien, wie sie üblicher Weise in der Lack- und Kunststoffindustrie eingesetzt

werden.

Die Herstellung der erfindungsgemäßen Dispersionen erfolgt durch Einarbeitung entsprechend modifizierter in das gewünschte Dispersions- bzw. Trägermedium oder Dispergiermittel unter Anwendung von gebräuchlichen Dispergieraggregaten, wie z. B. Zahnkolloidmühlen, Dissolvern, Ultraschalldispergatoren usw.

Durch Zugabe des Modifizierungsmittels in eine Partikeldispersion, insbesondere Nanopartikeldispersion, wird eine erfindungsgemäße Dispersion erhalten. Bei diesem Verfahren ist ebenso sicherzustellen, daß eine chemische, insbesondere kovalente Anbindung des Modifizierungsmittels an die Partikeloberfläche, insbesondere Nanopartikeloberfläche, stattfindet. Die Überführung einer erfindungsgemäßen Dispersion aus dem einen in ein anderes Dispersionsmedium gelingt beispielsweise durch eine Destillation. Durch Verwendung von geeigneten Schleppmitteln, die ein niedrigsiedendes Azeotrop mit dem zu entfernenden Dispergiermedium bilden, lassen sich solche Verfahren leicht optimieren.

Der Partikelgehalt der erfindungsgemäßen Dispersionen, gemessen als Glührückstand, kann dabei auf Werte von bis zu über 40 % gesteigert werden, ohne daß es zur Gelbildung bzw. zu einer nennenswerten Sedimentierung kommt.

Die erfindungsgemäßen Dispersionen können dabei mindestens einen zusätzlichen Stoff enthalten, der aus dem Bereich der lacktypischen Additive, Bindemittel oder Vernetzungsmittel stammt. Beispielsweise sind hier Netz- und Dispergieradditive bzw. Additive zur Steuerung der rheologischen Eigenschaften, aber auch Entschäumer, Lichtschutzmittel und Katalysatoren zu nennen.

Die erfindungsgemäßen Partikel, insbesondere Nanopartikel, und die erfindungsgemäßen Dispersionen sind ausgesprochen breit anwendbar. Die breite Anwendbarkeit in Kombination mit der außerordentlich guten Wirksamkeit der erfindungsgemäßen Partikel, insbesondere Nanopartikel, und der erfindungsgemäßen Dispersionen übertreffen Partikel, insbesondere Nanopartikel, und Dispersionen des Standes der Technik bei weitem.

Die Anwendung der erfindungsgemäßen Partikel, insbesondere Nanopartikel, und Dispersionen erfolgt durch Zugabe in bestehende Systeme, welche z. B. zu Lacken, Klebstoffen, Kunststoffen, etc weiterverarbeitet werden. Durch die Zugabe bereits kleiner Mengen der erfindungsgemäßen Partikel, insbesondere Nanopartikel, bzw. der erfindungsgemäßen Dispersionen wird eine außerordentlich erhöhte mechanische Beständigkeit bei gleichzeitig erhöhter Beständigkeit gegen chemische Einflüsse der letztendlich resultierenden Beschichtung bzw. des Formteils erzielt.

Überraschenderweise werden die Verarbeitungseigenschaften der Lacke und Kunststoffe nur unwesentlich beeinflußt, so daß keine neue Optimierung der äußeren Parameter bei diesen Anwendungen erfolgen muß.

Die erfindungsgemäßen Partikel, insbesondere Nanopartikel, und ihre Dispersionen eignen sich hervorragend für den Einsatz in Beschichtungsmaterialien, Kunststoffen, Klebstoffen, Dichtungsmassen etc.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

## Ausführungsbeispiele:

### 1. Herstellung der Modifizierungsmittel ("Modifizierungsmittel 1-11")

| | | | 1 | 2 | 3 | 4 | 5 | 6 |
|---|---|---|---|---|---|---|---|---|
| | Rohstoff | Hersteller | | | | | | |
| A | Baysilone-Oel MH 15 | GE Bayer | 24,71 | 24,71 | 24,71 | 25,50 | 26,93 | 22,82 |
| B | Dynasylan VTMO | Degussa | 16,73 | 16,73 | 16,73 | 17,26 | 18,23 | 15,45 |
| C | Uniox MUS 15 | NOF Europe | 24,71 | | | 22,32 | | |
| C | Unilube MB 40 S | NOF Europe | | 24,71 | | | 17,97 | |
| C | Unilube MA 170 T | NOF Europe | | | 24,71 | | | 30,46 |
| D | 1-Octen | | 33,76 | 33,76 | 33,76 | 34,84 | 36,79 | 31,18 |
| E | Karstedt-Kat 0,2% | W.C. Heraeus | 0,08 | 0,08 | 0,08 | 0,08 | 0,08 | 0,08 |

| | | | 7 | 8 | 9 | 10 | 11 |
|---|---|---|---|---|---|---|---|
| | Rohstoff | Hersteller | | | | | |
| A | MDH29D86M | siehe Anmerkung | 40,21 | 40,21 | 40,20 | 44,52 | 33,26 |
| B | Dynasylan VTMO | Degussa | 6,46 | 6,46 | 6,46 | 7,15 | 5,34 |
| C | Uniox MUS 15 | NOF Europe | 40,21 | | | | |
| C | Unilube MB 40 S | NOF Europe | | 40,21 | | 33,82 | |
| C | Unilube MA 170 T | NOF Europe | | | 40,24 | | 50,54 |
| D | 1-Octen | | 13,03 | 13,03 | 13,03 | 14,43 | 10,78 |
| E | Karstedt-Kat 0,2% | W.C. Heraeus | 0,08 | 0,08 | 0,08 | 0,08 | 0,08 |

Allgemeine Herstellvorschrift:

In einem 250-ml-Vierhalskolben mit Rührwerk, Thermometer, Rückflußkühler und Schutzgasanschluß wird (A) vorgelegt, unter Stickstoff auf 80 °C erhitzt und mit (E) versetzt. Anschließend wird innerhalb von 40 Minuten (B) zugetropft. Danach wird das Reaktionsgemisch wird für 30 Minuten bei 120 °C gerührt, und dann wird über einen Zeitraum von 20 Minuten (C) zugetropft. Nach beendeter Zugabe wird das Reaktionsgemisch bei 120 °C weitere 30 Minuten gerührt. Anschließend wird (D) über einen Zeitraum von 150 Minuten zugetropft und danach 60 Minuten gerührt.

Anmerkung:

Das Silikon MDH29D86M (siehe Graphik) läßt sich einfach durch eine Äquilibrierungsreaktion, wie bei Noll "Chemie und Technologie der Silicone", Wiley/VCH Weinheim, 1984 beschrieben, darstellen.

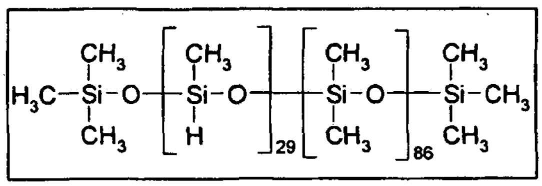

**2. Herstellung der Nanopartikelkonzentrate ("Nanopartikelkonzentrate 1-11")**

| | Produktname | Hersteller | Menge/ g |
|---|---|---|---|
| A | Köstrosol 2040AS | CWK-Bad Köstritz | 75,00 |
| B | 1-Methoxy-2-propanol | | 75,00 |
| C | Dynasylan PTMO | Degussa | 1,64 |
| D | Methoxypropylacetat | | 80,00 |
| E | Dynasylan OCTMO | Degussa | 1,17 |

(fortgesetzt)

| | Produktname | Hersteller | Menge/ g |
|---|---|---|---|
| F | Modifizierungsmittel (1-11) | | 0,60 |
| G | Disperbyk-168 | BYK-Chemie | 65,00 |

Allgemeine Herstellvorschrift:

In einem 250-ml-Vierhalskolben mit Rührwerk, Thermometer und Rückflußkühler wird (A) vorgelegt und mit (B) vermischt. Anschließend wird auf 70 °C erhitzt und (C) zugegeben. Nach einer Reaktionsdauer von 90 Minuten wird (D) zugegeben. Danach wird Vakuum angelegt, und es werden bei einer Temperatur von 70 °C 100 g Lösemittelgemisch abgetrennt. Nun werden nacheinander (E) und (F) zugegeben und für 120 Minuten bei 70 °C gerührt. Anschließend wird (G) zugegeben. Durch Abtrennung von 60 g Lösemittelgernisch im Vakuum wird ein Nanopartikelgehalt von 21,7 % erreicht.

**3. <u>Anwendungsbeispiele ("Anwendungsbeispiele</u> 1-11")**

Zweikomponenten-Autoreparatursystem

| Komponente 1 | Vergleichsprobe | Anwendungsbeispiel 1-11 |
|---|---|---|
| Macrynal SM515/70BAC | 46,7 | 46,7 |
| Methoxypropylacetat | 8,3 | 8,3 |
| Butylglykolacetat | 1,3 | 1,3 |
| TinStab BL277 (1%ige Lösung in Butylacetat) | 0,2 | 0,2 |
| Butylacetat | 10,1 | 10,1 |
| Nanopartikelkonzentrat 1-11 | ---- | 5,3 |
| | | |
| Komponente 2 | Vergleichsprobe | Anwendungsbeispiel 1-11 |
| Desmodur N 3390 | 26,5 | 26,5 |
| Butylacetat | 6,9 | 6,9 |

Macrynal SM 515/70BAC (Hydroxyfunktionelles Polyacrylat): UCB TinStab BL277 (Dibutylzinndilaurat): Akcros Chemicals Desmodur N 3390 (aliphatisches Polyisocyanat): Bayer AG

Die Bestandteile der jeweiligen Komponenten wurden intensiv vermischt. Unmittelbar vor der Beschichtung wurden die beiden Komponenten 1 und 2 gemischt. Die Applikation des Beschichtungssystems erfolgte durch eine Spritzapplikation auf PMMA-Platten (200 mm x 400 mm). Nach einer Ablüftzeit von einer Stunde bei Raumtemperatur wurde eine forcierte Trocknung bei 60 °C über einen Zeitraum von 12 Stunden durchgeführt. Die erzielte Schichtdicke der Beschichtung betrug ca. 45 $\mu$m.

Die Kratzbeständigkeit wurde mit einem Crockmeter-Gerät (Typ CM-5, ATLAS) auf Verkratzungsbeständigkeit geprüft. Dazu wurden die beschichteten Platten mit einem Poliertuch der Firma 3M (3M polishing paper, grade: 9 mic) reproduzierbar beansprucht (Auflagekraft: 9 N). Die Bewertung der Verkratzungsbeständigkeit erfolgte durch Messung des Glanzes der beanspruchten Stellen in Vergleich zum Glanz einer nicht beanspruchten Stelle auf der Prüfplatte. Als Ergebnis wurde der Restglanz in Prozent (%) angegeben. Der Glanz wurde mit dem micro-TRI-Gloss Gerät der Firma BYK-GARDNER bestimmt. Der Beobachtungswinkel wurde auf 85 ° eingestellt.

Die Qualität der Lackoberfläche, insbesondere der Verlauf des Beschichtungsmaterials, wurde optisch anhand einer Skale von 1-5 bewertet. Ein Wert von 1 entspricht einem sehr guten Verlauf des Lackes, ein Wert von 5 entspricht einem schlechten Lackverlauf, welches sich in einer orangenhautähnlichen Oberfläche zeigt.

| | Restglanz / % | Verlauf |
|---|---|---|
| Vergleichsbeispiel | 10 | 5 |
| Anwendungsbeispiel 1 | 81 | 4 |
| Anwendungsbeispiel 2 | 86 | 2 |
| Anwendungsbeispiel 3 | 84 | 4 |
| Anwendungsbeispiel 4 | 75 | 4 |
| Anwendungsbeispiel 5 | 83 | 2 |
| Anwendungsbeispiel 6 | 69 | 2 |
| Anwendungsbeispiel 7 | 80 | 4 |
| Anwendungsbeispiel 8 | 68 | 4 |
| Anwendungsbeispiel 9 | 85 | 2 |
| Anwendungsbeispiel 10 | 67 | 2 |
| Anwendungsbeispiel 11 | 53 | 2 |

**4. <u>Herstellung des Modifizierungsmittels ("Modifizierungsmittel 12")</u>**

In einem 250-ml-Vierhalskolben mit Heizung, Innenthermometer, Rührwerk, Rückflußkühler und Schutzgasanschluß wurden 100 g Si-H-funktionelles Polysiloxan mit folgender durchschnittlicher Struktur vorgelegt:

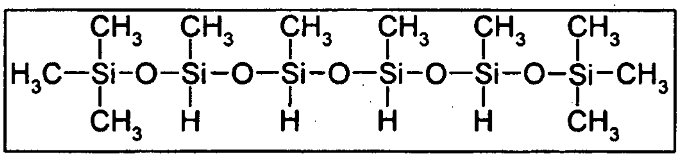

Dieses Silikon läßt sich einfach durch eine Äquilibrierungsreaktion, wie bei Noll "Chemie und Technologie der Silicone", Wiley/VCH Weinheim, 1984 beschrieben, darstellen.

Das Silikon wird unter Stickstoff auf 70 °C erhitzt, und es werden 10 ppm Hexachloroplatinsäure zugegeben. Anschließend werden 251 g eines Poly(oxythylen)glycol-a-Methyl-o-allylethers (Uniox PKA - 5009, NOF Europe) so zugegeben, daß die Reaktionstemperatur 80 °C nicht übersteigt. Danach erfolgt die Zugabe von 73 g Vinyltrimethoxysilan (z.B. Geniosil XL10, Wacker Chemie GmbH). Dabei ist darauf zu achten, daß die Reaktionstemperatur 80 °C nicht übersteigt. Nach der Zugabe wird das Reaktionsgemisch eine Stunde bei 80 °C gerührt. Anschließend wird Vakuum angelegt und ca. 2 g nicht umgesetztes Vinyltrimethoxysilan bzw. leicht flüchtige Bestandteile des Polysiloxans destillativ abgetrennt. Das Produkt ist niedrigviskos und besitzt eine leicht bernsteinartige Färbung.

**5. <u>Herstellung des Nanopartikelkonzentrates ("Nanopartikelkonzentrat 12") und eines entsprechenden Vergleiches</u>**

In einen Küchenmixer werden 40 g nanoskaliges Aluminiumoxid vorgelegt und mit 4 g Modifizierungreagenz aus dem vorangehenden Herstellbeispiel ("Modifizierungsmittel 12") versetzt. Anschließend wird die Mischung 1 Minute lang homogenisiert. Das mit Modifizierungsreagenz belegte Pulver wird eine Stunde lang bei 80 °C getempert. In eine Lösung aus 56,8 g Methoxypropylacetat und 3,2 g Netz- und Dispergierhilfsmittel (BYK-9077, BYK-Chemie GmbH) werden 40 g der modifizierten Nanopartikel eingerührt und anschließend mit Ultraschall dispergiert. Die so erhaltene Dispersion ist niedrigviskos und zeigt keinerlei Tendenz zur Gelbildung bzw. Sedimentation nach 28 Tagen Lagerung.

**6. <u>Anwendungsbeispiel</u>**

UV-Klarlack

| Komponente | Nullprobe | Vergleich | Anwendungs-beispiel 12 | |
|---|---|---|---|---|
| Sartomer SR-368[1] (isocyanurate triacylate) | 27 g | 27 g | 27 g | |
| Sartomer SR-494[1] (ethoxylated pentaerythritol tetraacrylate) | 9 g | 9 g | 9 g | |
| Sartomer CD-501[1] (trimethylolpropane triacrylate) | 27 g | 27 g | 27 g | |
| Sartomer SR-238[1] (1,6 hexanediol Diacrylate) | 27 g | 27 g | 27 g | |
| Esacure KB1[2] | 5 g | 5 g | 5 g | |
| Benzophenone | 5 g | 5 g | 5 g | |
| Nanopartikeldispersion 12 | 0 g | 0 g | 2,5 g | |
| Modifizierungsmittel 12 | 0 g | 0,1 | 0 g | |

1: Sartomer Company, Inc.
2: LAMBERTI S.p.A. chemical specialties

Die einzelnen Komponenten des Klarlacks werden intensiv miteinander vermischt und über einen Zeitraum von mindestens 12 Stunden bei Raumtemperatur an einem dunklen Ort gelagert.

Die Lacke wurden mit einem 25-$\mu$m-Spiralrakel auf PVC-Platten aufgetragen und anschließend 15 Minuten abgelüftet. Die Aushärtung der Beschichtungen erfolgte an einer UV-Anlage. Insgesamt wurden die Beschichtungen zweimal bei einer Bandgeschwindigkeit von 5,0 m/min mit einer Bestrahlungsintensität von 120 W/cm behandelt.

Nach einer Lagerungsdauer von drei Tagen wurden die beschichteten PVC-Platten mit Schuhcreme der Marke KIWI (KIWI brown) angeschmutzt. Nach 30 und 60 Minuten bzw. nach 24 Stunden wurde die Schuhcreme mit einem trockenen Tuch händisch entfernt und die getestete Stelle optisch bewertet.

| Testdauer | Nullprobe | Vergleich (nur Silikon) | Anwendungsbeispiel 12 |
|---|---|---|---|
| 30 Minuten | leichte Anschmutzung | Starke Anschmutzung | keine Anschmutzung |
| 60 Minuten | starke Anschmutzung, Lack ist angegriffen | Starke Anschmutzung | keine Anschmutzung |
| 24 Stunden | sehr starke Anschmutzung, Lack ist teilweise abgelöst | sehr starke Anschmutzung, Lack ist angegriffen | keine Anschmutzung |

**Patentansprüche**

1. Oberflächenmodifizierte Partikel insbesondere anorganisch basierte Partikel mit reaktionsfähigen Gruppen, insbesondere Hydroxylgruppen, an ihrer. Oberfläche und/oder aus Metall- und/oder Halbmetalloxiden, -hydroxiden und/oder -oxidhydroxiden bestehende oder diese enthaltende Partikel vorzugsweise Nanopartikel, wobei die Partikel an ihrer Oberfläche ein polysiloxanbasiertes Modifizierungsmittel aufweisen, insbesondere an ihrer Oberfläche mit einem polysiloxanbasierten Modifizierungsmittel, vorzugsweise unter Bildung chemischer, insbesondere kovalenter Bindungen, umgesetzt worden sind,
**dadurch gekennzeichnet,**
**daß** das Modifizierungsmittel ein Polysiloxan der folgenden allgemeinen Summenformel

$$(R^1_xR^2_{3-x}SiR^3)_yR^4$$

ist, wobei in der Summenformel bedeuten:

- x = 0 bis 2 einschließlich der Grenzen, insbesondere x = 0;
- y = 1 bis 10 einschließlich der Grenzen, insbesondere y = 2 bis 5;
- $R^1$ = einbindiger organischer Rest, bevorzugt mit 1 bis 18 Kohlenstoffatomen, insbesondere 1 bis 10 Kohlenstoffatomen, vorzugsweise 1 bis 3 Kohlenstoffatomen;

• $R^2$ = OH-Gruppe oder hydrolysierbare Gruppe enthaltend oder bestehend aus:

- einer linearen oder verzweigten oder cyclischen Alkoxygruppe mit 1 bis 6 Kohlenstoffatomen, insbesondere 1 bis 2 Kohlenstoffatomen,
- einem Halogenatom, insbesondere Chloratom oder
- einem Carbonsäurerest mit 1 bis 4 Kohlenstoffatomen, insbesondere 2 Kohlenstoffatomen;

• $R^3$ = Sauerstoff oder mindestens zweibindiger organischer Rest enthaltend oder bestehend aus:

- einem linearen oder verzweigten, vorzugsweise linearen Alkylenrest, insbesondere mit 1 bis 8 Kohlenstoffatomen,
- einem Alkylenether,
- einem Alkylenthioether,
- einem Alkylenpolyether, bevorzugt auf Basis von Ethylenoxid, Propylenoxid, Butylenoxid oder Styroloxid oder Mischungen der Oxide oder auf Basis eines statistischen oder Blockpolyethers,
- einem Arylenpolyether,
- einem Alkylenpolyester oder
- einer organischen aliphatischen oder aromatischen oder arylaliphatischen Gruppe, insbesondere wobei die Gruppe neben Ester- und/oder Ethergruppen auch Urethan- und/oder Harnstoffgruppen enthält;

• $R^4$ = ein- oder mehrbindiger Rest enthaltend oder bestehend aus einem Polydialkylsiloxan mit 4 bis 200 Si-Einheiten und mit $C_1$-$C_{18}$-Alkylgruppen an den Siliciumatomen, wobei die $C_1$-$C_{18}$-Alkylgruppen teilweise und jeweils unabhängig voneinander durch eine oder mehrere der folgenden modifizierenden Gruppen (G), vorzugsweise polaren modifizierenden Gruppen (G), ersetzt bzw. substituiert sind, ausgewählt aus den nachfolgend unter (i) bis (iv) aufgeführten modifizierenden Gruppen (G1) bis (G4):

(i) (Poly-)Ethergruppen enthaltende Gruppe (G1), insbesondere auf Basis mindestens eines Alkylenoxids,
(ii) Polyestergruppen enthaltende Gruppe (G2),
(iii) Arylalkylgruppen enthaltende Gruppe (G3),
(iv) perfluorierte Alkylgruppen enthaltende Gruppe (G4).

2. Oberflächenmodifzierte Partikel nach Anspruch 1, **dadurch gekennzeichnet,**

• **daß** die (Poly-)Ethergruppen enthaltende Gruppe (G1) auf Basis mindestens eines Alkylenoxides der allgemeinen Formel

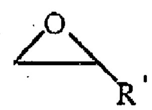

wobei der Rest R' ein Wasserstoffatom, einen Phenylrest oder einen Alkylrest, insbesondere einen Alkylrest mit 1 bis 4 Kohlenstoffatomen, bezeichnet, oder auf Basis einer Mischung von mindestens zwei dieser Alkylenoxide ausgebildet ist; und/oder
• **daß** die (Poly-)Ethergruppen enthaltende Gruppe (G1) eine Molmasse im Bereich von 116 bis 15.000 Dalton, vorzugsweise im Bereich von 160 bis 4.000 Dalton, besonders bevorzugt im Bereich von 250 bis 2.500 Dalton, aufweist; und/oder
• **daß** das Verhältnis aus der Masse des Poly(di)alkylsiloxans und der der modifizierenden Gruppe (G1) im Bereich von 12 : 1 bis 0,07 : 1, vorzugsweise im Bereich von 2 : 1 bis 0,5 : 1, liegt.

3. Oberflächenmodifizierte Partikel nach Anspruch 1 oder 2, **dadurch gekennzeichnet,**

• **daß** die Polyestergruppen enthaltende Gruppe (G2) eine aliphatische und/oder cycloaliphatische und/oder aromatische Polyestergruppe oder eine diese Gruppe enthaltende Gruppe ist; und/oder
• **daß** die Polyestergruppen enthaltende Gruppe (G2) mindestens drei Gruppen

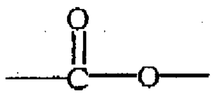 und / oder 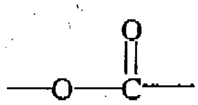

enthält; und/oder

- **daß** die Polyestergruppen enthaltende Gruppe (G2) eine Molmasse im Bereich von 344 bis 4.000 Dalton, vorzugsweise im Bereich von 500 bis 2.000 Dalton, besonders bevorzugt im Bereich von 500 bis 1.500 Dalton, aufweist; und/oder
- **daß** das Verhältnis aus der Masse des Poly(di)alkylsiloxans und der der modifizierenden Gruppe (G2) im Bereich von 1 : 5 bis 1 : 0,05, vorzugsweise im Bereich von 1 : 2 bis 1 ; 0,2, liegt.

**4.** Oberflächenmodifizierte Partikel nach einem der vorangehenden Ansprüche, **dadurch gekennzeichnet, daß** die Arylalkylgruppen enthaltende Gruppe (G3) eine Phenylpropylgruppe, insbesondere eine 2-Phenylpropylgruppe, oder eine diese Gruppe enthaltende Gruppe ist.

**5.** Oberflächenmodifizierte Partikel nach einem der vorangehenden An-sprüche, **dadurch gekennzeichnet, daß** die perfluorierte Alkylgruppen enthaltende Gruppe (G4) eine perfluorierte Alkylgruppe mit 3 bis 8 Kohlenstoffatomen oder eine diese Gruppe enthaltende Gruppe ist und/oder daß die perfluorierte Alkylgruppen enthaltende Gruppe (G4) eine Tetrahydroperfluoralkylgruppe, insbesondere eine 1,1,2,2-Tetrahydroperfluoralkylgruppe, vorzugsweise mit 3 bis 8 Kohlenstoffatomen, oder eine diese Gruppe enthaltende Gruppe ist.

**6.** Oberflächenmodifizierte Partikel, nach Anspruch 1 **dadurch gekennzeichnet**, daβ die unter (i) bis (iv) aufgeführten modifizierenden Gruppen (G1) bis (G4) ausgewählt sind:

(i) (Poly-)Ethergruppen enthaltende Gruppe (G1), insbesondere auf Basis mindestens eines Alkylenoxids, besonders bevorzugt auf Basis mindestens eines Alkylenoxides der allgemeinen Formel

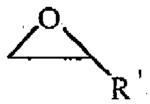

wobei der Rest R' ein Wasserstoffatom, einen Phenylrest oder einen Alkylrest, insbesondere einen Alkylrest mit 1 bis 4 Kohlenstoffatomen, bezeichnet, oder auf Basis einer Mischung von mindestens zwei dieser Alkylenoxide,
insbesondere wobei die (Poly-)Ethergruppen enthaltende Gruppe (G1) eine Molmasse im Bereich von 116 bis 15.000 Dalton, vorzugsweise im Bereich von 160 bis 4.000 Dalton, besonders bevorzugt im Bereich von 250 bis 2.500 Dalton, aufweist und/oder insbesondere wobei das Verhältnis aus der Masse des Poly(di)alkylsiloxans und der der modifizierenden Gruppe (G1) im Bereich von 12 : 1 bis 0,07 : 1, vorzugsweise im Bereich von 2 : 1 bis 0,5 : 1, liegt.
(ii) Polyestergruppen enthaltende Gruppe (G2), ausgewählt aus aliphatischen und/oder cycloaliphatischen und/oder aromatischen Polyestergruppen oder diese Gruppen enthaltenden Gruppen, vorzugsweise mit mindestens drei Gruppen

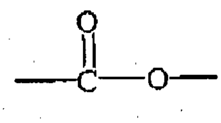 und / oder 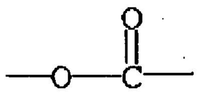 ,

insbesondere wobei die Polyestergruppen enthaltende Gruppe (G2) eine Molmasse im Bereich von 344 bis 4.000 Dalton, vorzugsweise im Bereich von 500 bis 2.000 Dalton, besonders bevorzugt im Bereich von 500 bis 1.500 Dalton, aufweist und/oder insbesondere wobei das Verhältnis aus der Masse des Poly(di)alkylsiloxans und der der modifizierenden Gruppe (G2) im Bereich von 1 : 5 bis 1 : 0,05, vorzugsweise im Bereich von 1 : 2

bis 1 : 0,2, liegt.

(iii) Arylalkylgruppen enthaltende Gruppe (G3), vorzugsweise Phenylpropylgruppe, insbesondere eine 2-Phenylpropylgruppe, oder eine diese Gruppe enthaltende Gruppe;

(iv) perfluorierte Alkylgruppen enthaltende Gruppe (G4), vorzugsweise perfluorierte Alkylgruppe mit 3 bis 8 Kohlenstoffatomen und/oder Tetrahydroperfluoralkylgruppe, insbesondere 1,1,2,2-Tetrahydroperfluoralkylgruppe, vorzugsweise mit 3 bis 8 Kohlenstoffatomen, oder diese Gruppe enthaltende Gruppe.

**7.** Oberflächenmodifizierte Partikel nach einem der vorangehenden Ansprüche, **dadurch gekennzeichnet, daß** der Anteil des Modifizierungsmittels 0,01 bis 50 Gew.%, insbesondere 0,05 bis 30 Gew.-%, vorzugsweise 0,1 bis 15 Gew.-%, bezogen auf das Gesamtgewicht der oberflächenmodifizierten Partikel, beträgt.

**8.** Oberflächenmodifizierte Partikel nach einem der vorangehenden An-sprüche, **dadurch gekennzeichnet, daß** die Partikel anorganisch basierte Partikel mit reaktionsfähigen Gruppen an ihrer Oberfläche sind, insbesondere mit silanreaktiven und/oder bzw. siloxanreakiven Gruppen, vor-zugsweise ausgewählt aus der Gruppe von Hydroxylgruppen, Halogen- , atomen und Halogenatome enthaltenden Gruppen, besonders bevorzugt Hydroxylgruppen, und/oder daß die Partikel anorganisch basierte Partikel mit Hydroxylgruppen an ihrer Oberfläche sind.

**9.** Oberflächenmodifizierte Partikel nach einem der vorangehenden Ansprüche, **dadurch gekennzeichnet, daß** die Partikel aus mindestens einem Oxid, Hydroxid und/oder Oxidhydroxid mindestens eines Metalls oder Halbmetalls oder aber Mischungen oder Kombinationen solcher Verbin-dungen bestehen oder diese Verbindungen enthalten, insbesondere aus mindestens einem Oxid, Hydroxid und/oder Oxidhydroxid des Aluminiums, Siliziums, Zinks und/oder Titans bestehen oder diese Verbindungen enthalten.

**10.** Oberflächenmodifizierte Partikel nach einem der vorangehenden Ansprüche, **dadurch gekennzeichnet, daß** die Partikel Teilchengrößen, insbesondere bestimmt mittels Transmissionselektronenmikroskopie, im Bereich von 0,1 bis 1.000 nm, insbesondere 0,5 bis 500 nm, vorzugsweise 1 bis 350 nm, weiter bevorzugt 2 bis 200 nm, besonders bevorzugt unterhalb 100 nm, ganz besonders bevorzugt unterhalb von 50 nm, aufweisen.

**11.** Oberflächenmodifizierte Partikel nach einem der vorangehenden Ansprüche, **dadurch gekennzeichnet, daß** die Partikel zusätzlich mit einem Silan der allgemeinen Summenformel

$$R^6_{(4-x')}SiR^5_{x'}$$

modifiziert sind, wobei in der Summenformel bedeuten:

- x' = 1 bis 3 einschließlich der Grenzen;
- $R^5$ = einbindiger linearer oder verzweigter oder cyclischer organischer Rest mit 1 bis 18 Kohlenstoffatomen, bevorzugt 1 bis 6 Kohlenstoffatomen, besonders bevorzugt 1 bis 3 Kohlenstoffatomen;
- $R^6$ = Hydroxylgruppe oder hydrolysierbare Gruppe enthaltend oder bestehend aus:
  - einer linearen oder verzweigten oder cyclischen Alkoxygruppe mit 1 bis 6 Kohlenstoffatomen, insbesondere 1 bis 2 Kohlenstoffatomen,
  - einem Halogenatom, insbesondere Chloratom, oder
  - einem Carbonsäurerest mit 1 bis 4 Kohlenstoffatomen, bevorzugt 2 Kohlenstoffatomen.

**12.** Oberflächenmodifizierte Partikel nach einem der vorangehenden Ansprüche, **dadurch gekennzeichnet, daß** die Partikel zusätzlich mit einem Silan der allgemeinen Summenformel
modifiziert sind, wobei in der Summenformel bedeuten:

- x" = 1 bis 3 einschließlich der Grenzen;
- $R^7$ = Hydroxylgruppe oder hydrolysierbare Gruppe enthaltend oder bestehend aus:
  - einer linearen oder verzweigten oder cyclischen Alkoxygruppe mit 1 bis 6 Kohlenstoffatomen, insbesondere 1 bis 2 Kohlenstoffatomen,
  - einem Halogenatom, insbesondere Chloratom, oder
  - einem Carbonsäurerest mit 1 bis 4 Kohlenstoffatomen, bevorzugt 2 Kohlenstoffatomen;
- $R^8$ = Sauerstoff oder mindestens zweibindiger organischer Rest enthaltend oder bestehend aus:

- einem linearen oder verzweigten, vorzugsweise linearen Alkylenrest, insbesondere mit 1 bis 8 Kohlenstoffatomen,
- einem Alkylenether,
- einem Alkylenthioether,
- einem Alkylenpolyether, bevorzugt auf Basis von Ethylenoxid, Propylenoxid, Butylenoxid oder Styroloxid oder Mischungen der Oxide oder auf Basis eines statistischen oder Blockpolyethers,
- einem Arylenpolyether,
- einem Alkylenpolyester oder
- einer organischen aliphatischen oder aromatischen oder arylaliphatischen Gruppe, insbesondere wobei die Gruppe neben Ester- und/oder Ethergruppen auch Urethan- und/oder Harnstoffgruppen enthält;

• $R^9$= zweibindige organische Gruppe, insbesondere mit einer Molmasse im Bereich von 130 bis 5.000 Dalton, enthaltend oder bestehend aus:

- einer Polyethergruppe, vorzugsweise enthaltend oder bestehend aus Ethylenoxid, Propylenoxid, Butylenoxid oder Styroloxid oder Mischungen dieser Oxide,
- einer aliphatischen und/oder cycloaliphatischen und/oder aromatischen Polyestergruppe, vorzugsweise mit mindestens drei Gruppen

• $R^{10}$ = Alkylgruppe oder Acetoxygruppe oder ein Rest -O-$R^{11}$, wobei $R^{11}$ eine Alkylgruppe mit 1 bis 18 Kohlenstoffatomen ist, oder ein Rest -O-CO-NH-$R^{12}$, wobei $R^{12}$ eine Alkylgruppe mit 1 bis 18 Kohlenstoffatomen ist.

**13.** Verfahren zur Herstellung der oberflächenmodifizierte Partikel nach den Ansprüchen 1 bis 12, bei dem Partikel, insbesondere anorganisch basierte Partikel mit reaktiven Gruppen, insbesondere Hydroxylgruppen, an ihrer Oberfläche und/oder aus Metall- und/oder Halbmetalloxiden, -hydroxiden und/oder -oxidhydroxiden bestehende oder diese enthaltende Partikel, vorzugsweise Nanopartikel, mit einem polysiloxanbasierten Modifizierungsmittel umgesetzt werden, vorzugsweise unter Bildung chemischer, insbesondere kovalenter Bindungen umgesetzt werden
**dadurch gekennzeichnet,**
**daß** als Modifizierungsmittel ein Polysiloxan der folgenden allgemeinen Summenformel

$$(R^1_xR^2_{3-x}SiR^3)_yR^4$$

eingesetzt wird, wie in einem der vorangehenden Ansprüche definiert.

**14.** Verwendung von oberflächenmodifizierten Partikeln nach den Ansprüchen 1 bis 12 als Füllstoffe.

**15.** Verwendung von oberflächenmodifizierten Partikeln nach den Ansprüchen 1 bis 12 in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellakken, in Klebstoffen und in Dichtungsmassen.

**16.** Dispersionen, enthaltend oberflächenmodifizierte Partikel nach den Ansprüchen 1 bis 12 in einem Träger- oder Dispergiermedium.

**17.** Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, enthaltend oberflächenmodifizierte Partikel nach den Ansprüchen 1 bis 12.

## Claims

**1.** Surface modified particles, in particular inorganically based particles having reactive groups, in particular hydroxyl groups, have been converted on their surface, and/or particles made from or containing metal and/or semi-metal oxide, hydroxide, and/or oxide hydroxide, preferably nanoparticles, wherein the particles have a modifying agent based on polysiloxane on their surface, in particular have been converted on their surface with a modifying agent on polysiloxane basis, preferably while forming chemical, in particular covalent bonds,
**characterized in that**
the modifying agent is a polysiloxane having the following general molecular formula

$(R^1_x R^2_{3-x} Si R^3)_y R^4$

wherein the following means the following in the molecular formula:

- x = 0 to 2, including the thresholds, in particular x=0;
- y = 1 to 10, including the thresholds, in particular y=2 to 5;
- $R^1$ = single bond organic residue, preferably with 1 to 18 carbon atoms, in particular 1 to 10 carbon atoms, preferably 1 to 3 carbon atoms;
- $R^2$ = OH group or hydrolysable group containing, or consisting of:

  - a linear or branched or cyclic Alkoxy group with 1 to 6 carbon atoms, in particular 1 to 2 carbon atoms,
  - a halogen atom, in particular chlorine atom, or
  - a carbonic acid residue with 1 to 4 carbon atoms, in particular 2 carbon atoms;

- $R^3$ = oxygen, or at least a two-bond organic residue containing, or consisting of:

  - a linear or branched, preferably linear alkylene residue, in particular with 1 to 8 carbon atoms,
  - an alkylene ether,
  - an alkylene thioether,
  - an alkylene polyether, preferably based on ethylene oxide, propylene oxide, butylene oxide, or styrene oxide, or mixtures of the oxides, or based on the statistical or block polyether,
  - an arylene polyether,
  - an alkylene polyester, or
  - an organic aliphatic or aromatic or aryl aliphatic group, in particular wherein in addition to ester and/or ether groups, the group also contains urethane and/or urea groups;

- $R^4$ - a one or multiple bond residue, containing or consisting of a polydialkyl siloxane with 4 to 200 Si unit and with $C_1$-$C_{18}$-alkyl groups at the silicium atoms, wherein the $C_1$-$C_{18}$-alkyl groups partially, and each independently are replaced, or substituted, respectively, by one or more of the following modified groups (G), preferably by polar modified groups (G), selected from the modified groups (G1) to (G4) listed below under (i) to (iv):

  (i) group (G1) containing (poly)ether groups, in particular based on at least one alkylene oxide,
  (ii) group (G2) containing polyester groups,
  (iii) group (G3) containing arylalkyl groups,
  (iv) group (G4) containing perfluorinated alkyl groups.

**2.** The surface modified particles according to claim 1, **characterized in that**

- the group (G1) containing the (poly)ether groups is embodied based on at least one alkylene oxide of the general formula

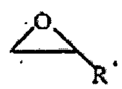

wherein the residue $R^1$ is denoted by a hydrogen atom, a phenyl residue, or an alkyl residue, in particular an alkyl residue with 1 to 4 carbon atoms, or is embodied based on a mixture of at least two of these alkylene oxides; and/or
- the group (G1) containing the (poly)ether groups has a molecular weight in the range of 116 to 15,000 Dalton, preferably in the range of 160 to 4,000 Dalton, particularly preferred in the range of 250 to 2,500 Dalton; and/or
- the ratio of the weight of the poly(di)alkyl siloxane and that of the modified group (G1) is in the range of 12:1 to 0.07:1, preferably in the range of 2:1 to 0.5:1.

**3.** The surface modified particles according to claims 1 or 2, **characterized in that**

- the group (G2) containing the polyester groups is an aliphatic and/or cycloaliphatic and/or aromatic polyester group, or a group containing this group; and/or

• the group (G2) containing the polyester groups contains at least three groups;

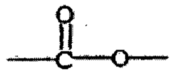 and/or 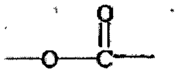

and/or

• the group (G2) containing the polyester groups has a molecular weight in the range of 344 to 4,000 Dalton, preferably in the range of 500 to 2,000 Dalton, particularly preferred in the range of 500 to 1,500 Dalton; and/or

• the ratio of the weight of the poly(di)alkyl siloxane and that of the modified group (G2) is in the range of 1:5 to 1:0.05, preferably in the range of 1:2 to 1:0.2.

**4.** The surface modified particles according to one of the previous claims, **characterized in that** the group (G3) containing aryl alkyl groups is a phenyl propyl group, in particular a 2-phenyl propyl group, or a group containing this group.

**5.** The surface modified particles according to one of the previous claims, **characterized in that** the group (G4) containing the perfluorinated alkyl groups is a perfluorinated alkyl group with 3 to 8 carbon atoms, or a group containing this group, and/or the group (G4) containing the perfluorinated alkyl groups is a tetrahydroperfluoroalkyl group, in particular a 1,1,2,2-tetrahydroperfluoroalkyl group, preferably with 3 to 8 carbon atoms, or a group containing this group.

**6.** The surface modified particles according to claim 1,
**characterized in that**
the modified groups (G1) to (G4) listed under (i) to (iv) are selected from:

(i) a group (G1) containing (poly)ether groups, in particular based on at least one alkylene oxide, particularly preferred based on at least one alkylene oxide of the general formula

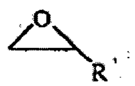

wherein the residue $R^1$ denotes a hydrogen atom, a phenyl residue, or an alkyl residue, in particular an alkyl residue with 1 to 4 carbon atom, or is based on a mixture of at least two of these alkylene oxides,
in particular, wherein the group (G1) containing the (poly)ether groups has a molecular weight in the range of 116 to 15,000 Dalton, preferably in the range of 160 to 4,000 Dalton, particularly preferred in the range of 250 to 2,500 Dalton, and/or in particular wherein the ratio of the weight of the poly(di)alkyl siloxane and that of the modified group (G1) is in the range of 12:1 to 0.007:1, preferably in the range of 2:1 to 0.5:1.
(ii) The group (G2) containing polyester groups, selected from aliphatic and/or cycloaliphatic and/or aromatic polyester groups, or groups containing these groups, preferably with at least three groups

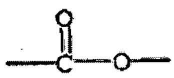 and/or 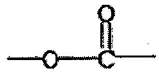 ,

in particular, wherein the group (G2) containing the polyester group has a molecular weight in the range of 344 to 4,000 Dalton, preferably in the range of 500 to 2,000 Dalton, particularly preferred in the range of 500 to 1,500 Dalton, and/or in particular, wherein the ratio of the weight of the poly(di)alkyl siloxane and that of the modified group (G2) is in the range of 1:5 to 1:0.05, preferably in the range of 1:2 to 1:0.2.
(iii) A group (G3) containing arylalkyl groups, preferably phenyl propyl groups, in particular a 2-phenyl propyl group, or a group containing this group;
(iv) a group (G4) containing perfluorinated alkyl groups, preferably a perfluorinated alkyl group with 3 to 8 carbon atoms, and/or a tetrahydroperfluoroalkyl group, in particular a 1,1,2,2-tetrahydroperfluoroalkyl group, preferably with 3 to 8 carbon atoms, or a group containing this group.

**7.** The surface modified particles according to one of the previous claims, **characterized in that** the proportion of the modifying agent is 0.01 to 50% by weight, in particular 0.05 to 30% by weight, preferably 0.1 to 15% by weight, based on the total weight of the surface modified particles.

**8.** The surface modified particles according to one of the previous claims, **characterized in that** the particles are inorganically based particles having reactive groups on their surface, in particular with silane reactive and/or siloxane reactive groups, respectively, preferably selected from the group of hydroxyl groups, halogen atoms, and groups containing halogen atoms, particularly preferred hydroxyl groups, and/or the particles are inorganically based particles with hydroxyl groups on their surface.

**9.** The surface modified particles according to one of the previous claims, **characterized in that** the particles consist of at least one oxide, hydroxide, and/or oxide hydroxide of at least one metal or semi-metal, or mixtures or combinations of such compounds, or contain these compounds, in particular consist of at least one oxide, hydroxide, and/or oxide hydroxide of aluminum, silicium, zinc, and/or titanium, or contain these compounds.

**10.** The surface modified particles according to one of the previous claims, **characterized in that** the particles have particle sizes, in particular as determined by means of transmission electron microscopy, in the range of 0.1 to 1,000 nm, in particular 0.5 to 500 nm, preferably 1 to 350 nm, further preferred 2 to 200 nm, particularly preferred below 100 nm, most preferred below 50 nm.

**11.** The surface modified particles according to one of the previous claims, **characterized in that** the particles are additionally modified with a silane of the general molecular formula

$$R^6_{(4-x')}SiR^5_{x'},$$

wherein the following means the following in the molecular formula:

- x' = 1 to 3, including the thresholds;
- $R^5$ = single bond linear, or branched, or cyclic organic residue with 1 to 18 carbon atoms, preferably 1 to 6 carbon atoms, particularly preferred 1 to 3 carbon atoms;
- $R^6$ = hydroxyl group or hydrolysable group containing, or consisting of:

  - a linear or branched, or cyclic alkoxy group with 1 to 6 carbon atoms, in particular 1 to 2 carbon atoms,
  - a halogen atom, in particular chlorine atom, or
  - a carbonic acid residue with 1 to 4 carbon atoms, preferably 2 carbon atoms.

**12.** The surface modified particles according to one of the previous claims, **characterized in that** the particles are additionally modified with a silane of the general molecular formula

$$R^7_{(4-x'')}Si(R^8-R^9-R^{10})_{x''},$$

wherein the following means the following in the molecular formula:

- X" = 1 to 3, including the thresholds;
- $R^7$ = hydroxyl group or hydrolysable group containing, or consisting of:

  - a linear or branched, or cyclic alkoxy group with 1 to 6 carbon atoms, in particular 1 to 2 carbon atoms,
  - a halogen atom, in particular chlorine atom, or
  - a carbonic acid residue with 1 to 4 carbon atoms, preferably 2 carbon atoms;

- $R^8$ = oxygen, or at least a double bond organic residue containing, or consisting of:

  - a linear or branched, preferably linear alkylene residue, in particular with 1 to 8 carbon atoms,
  - an alkylene ether,
  - an alkylene thioether,
  - an alkylene polyether, preferably based on ethylene oxide, propylene oxide, butylene oxide, or styrene oxide, or mixtures of the oxides, or based on a statistical or block polyether,
  - an arylene polyether,

- an alkylene polyester, or
- an organic aliphatic or aromatic or arylaliphatic group, in particular, wherein in addition to ester and/or ether groups, the group also contains urethane and/or urea groups;

• $R^9$ = a double bond organic group, in particular with a molecular weight in the range of 130 to 5,000 Dalton, containing, or consisting of:

- a polyether group, preferably containing, or consisting of ethylene oxide, propylene oxide, butylene oxide, or styrene oxide, or mixtures of these oxides,
- an aliphatic and/or cycloaliphatic and/or aromatic polyester group, preferably with at least three groups

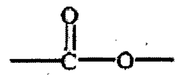 and/or 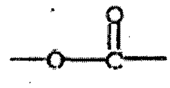 ;

• $R^{10}$ = an alkyl group or acetoxy group, or a residue -O-$R^{11}$, wherein $R^{11}$ is an alkyl group with 1 to 18 carbon atoms, or a residue -O-CO-NH-$R^{12}$, wherein $R^{12}$ is an alkyl group with 1 to 18 carbon atoms.

**13.** Method for the production of the surface modified particles according to claims 1 to 12, wherein particles, in particular inorganically based particles having reactive groups, in particular hydroxyl groups, are converted on their surface, and/or particles consisting of, or containing metal and/or semi-metal oxides, hydroxides, and/or oxide hydroxides, preferably nanoparticles, are converted with a polysiloxane based modifying agent, preferably while forming chemical, in particular covalent bonds,
**characterized in that**
as the modifying agent, a polysiloxane of the following general molecular formula

$$(R^1{}_xR^2{}_{3-x}SiR^3)_yR^4$$

is used, as defined in one of the previous claims.

**14.** Use of surface modified particles according to claims 1 to 12 as fillers.

**15.** Use of surface modified particles according to claims 1 to 12 in coating agents and coating systems, in particular varnishes, paints, and the like, in dispersions of all types, in plastics, in foams, in cosmetics, in particular nail polishes, in adhesives, and in sealing compounds.

**16.** Dispersions, containing surface modified particles according to claims 1 to 12 in a carrier or dispersing agents.

**17.** Coating agents and coating systems, in particular varnishes, paints, and the like, plastics, foams, cosmetics, in particular nail polishes, adhesives, and sealing compounds, containing surface modified particles according to claims 1 to 12.

## Revendications

**1.** Particules modifiées en surface, en particulier particules à base inorganique avec des groupes réactifs à leur surface, en particulier des groupes hydroxyles, et/ou particules consistant en oxydes, hydroxydes ou oxyhydroxydes de métaux et/ou de métalloïdes ou contenant ces derniers, de préférence nanoparticules, les particules comportant à leur surface un agent modificateur basé polysiloxane, en particulier ayant réagi à leur surface avec un agent modificateur basé polysiloxane, de préférence avec formation de liaison chimiques, en particulier liaison covalentes,
**caractérisées en ce que**
l'agent modificateur est un polysiloxane de la formule somme générale ci-après

$$(R^1{}_xR^2{}_{3-x}SiR^3)_yR^4$$

sachant que les symboles de la formule somme signifient ;

• x = 0 à 2, bornes comprises, en particulier x = 0 ;
• y = 1 à 10, bornes comprises, en particulier y = 2 à 5 ;
• $R^1$ = radical organique monovalent, de préférence avec 1 à 18 atomes de carbone, en particulier 1 à 10 atomes de carbone, de préférence 1 à 3 atomes de carbone ;
• $R^2$ = groupe OH ou groupe hydrolysable contenant ou consistant en :

- un groupe alcoxyle linéaire ou ramifié ou cyclique avec 1 à 6 atomes de carbone, en particulier 1 à 2 atomes de carbone,
- un halogène, en particulier un atome de chlore ou
- un radical acide carboxylique avec 1 à 4 atomes de carbone, en particulier 2 atomes de carbone ;

• $R^3$ = un oxygène ou un radical organique au moins divalent contenant ou consistant en :

- un radical alkylène linéaire ou ramifié, de préférence linéaire, en particulier avec 1 à 8 atomes de carbone
- un éther d'alkylène,
- un thioéther d'alkylène,
- un polyéther d'alkylène, de préférence à base d'oxyde d'éthylène, d'oxyde de propylène, d'oxyde de butylène ou d'oxyde de styrène ou de mélanges de ces oxydes ou à base d'un polyéther statistique ou en masse,
- un polyéther d'arylène,
- un polyester d'alkylène ou
- un groupe organique aliphatique ou aromatique ou arylaliphatique, en particulier dans lequel le groupe contient aussi, outre des groupes éther ou ester, des groupes uréthanes et/ou urées ;

• $R^4$ = un radical mono- ou plurivalent contenant ou consistant en un polydialkylsiloxane avec 4 à 200 unités Si et avec des groupes alkyles en $C_1$ à $C_{18}$ sur les atomes de silicium, les groupes alkyles en $C_1$ à $C_{18}$ étant remplacés, respectivement substitués en partie et respectivement indépendamment les uns des autres par un ou plusieurs des groupes modifiants (G) suivants, de préférence des groupes modifiants (G) polaires, choisis parmi les groupes modifiants (G1) à (G4) énumérés ci-après sous (i) à (iv) :

(i) groupe (G1) contenant des groupes (poly)éthers, en particulier à base d'un oxyde d'alkylène,
(ii) groupe (G2) contenant des groupes polyesters,
(iii) groupe (G3) contenant des groupes arylalkyles,
(iv) groupe (G4) contenant des groupes alkyle perfluorés.

**2.** Particules modifiées en surface selon la revendication 1, **caractérisées en ce que**

• le groupe (G1) contenant les groupes (poly)éthers est formé à base d'au moins un oxyde d'alkylène de la formule générale

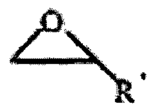

dans laquelle le radical R' désigne un atome d'hydrogène, un radical phényle ou un radical alkyle, en particulier un radical alkyle avec 1 à 4 atomes de carbone, ou est formé sur la base d'un mélange d'au moins deux de ces oxydes d'alkylène ; et/ou
• le groupe (G1) contenant les groupes (poly)éthers présente une masse molaire dans l'intervalle de 116 à 15.000 Daltons, de préférence dans l'intervalle de 160 à 4.000 Daltons, de façon particulièrement préférée dans l'intervalle de 250 à 2.500 Daltons ; et/ou
• le rapport de la masse du poly(di)alkyle siloxane et du groupe modifiant (G1) est situé dans l'intervalle de 12 : 1 à 0,07 : 1, de préférence dans l'intervalle de 2 : 1 à 0,5 : 1.

**3.** Particules modifiées en surface selon la revendication 1 ou 2, **caractérisées en ce que**

• le groupe (G2) contenant les groupes polyesters est un groupe polyester aliphatique et/ou cycloaliphatique et/ou aromatique ou un groupe contenant ces groupes ; et/ou

• le groupe (G2) contenant les groupes polyesters contient au moins trois groupes

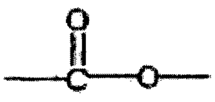

et/ou

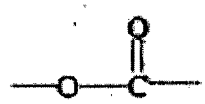

et/ou

• le groupe (G2) contenant les groupes polyesters présente une masse molaire dans l'intervalle de 344 à 4.000 Daltons, de préférence dans l'intervalle de 500 à 2.000 Daltons, de façon particulièrement préférée dans l'intervalle de 500 à 1.500 Daltons ; et/ou

• le rapport de la masse du poly(di)alkyle siloxane et du groupe modifiant (G2) est situé dans l'intervalle de 1 : 5 à 1 : 0,05, de préférence dans l'intervalle de 1 : 2 à 1 : 0,2.

**4.** Particules modifiées en surface selon l'une quelconque des revendications précédentes, **caractérisées en ce que** le groupe (G3) contenant les groupes arylalkyle est un groupe phénylpropyle, en particulier un groupe 2-phénylpropyle, ou un groupe contenant ce groupe.

**5.** Particules modifiées en surface selon l'une quelconque des revendications précédentes, **caractérisées en ce que** le groupe (G4) contenant les groupes alkyles perfluorés est un groupe alkyle perfluoré avec 3 à 8 atomes de carbone ou un groupe contenant ce groupe, et/ou **en ce que** le groupe (G4) contenant les groupes alkyles perfluorés est un groupe tétrahydroperfluoralkyle, en particulier un groupe 1,1,2,2-tétrahydroperfluoralkyle, de préférence avec 3 à 8 atomes de carbone, ou un groupe contenant ce groupe.

**6.** Particules modifiées en surface selon la revendication 1, **caractérisées en ce que** les groupes modifiants (G1) à (G4) cités sous (i) à (iv) sont choisis :

(i) groupe (G1) contenant des groupes (poly)éthers, en particulier sur la base d'au moins un oxyde d'alkylène, de façon particulièrement préférée sur la base d'au moins un oxyde d'alkylène de la formule générale

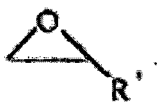

dans laquelle le radical R' désigne un atome d'hydrogène, un radical phényle ou un radical alkyle, en particulier un radical alkyle avec 1 à 4 atomes de carbone, ou sur la base d'un mélange d'au moins deux de ces oxydes d'alkylène,

en particulier **en ce que** le groupe (G1) contenant les groupes (poly)éthers présente une masse molaire dans l'intervalle de 116 à 15.000 Daltons, de préférence dans l'intervalle de 160 à 4.000 Daltons, de façon particulièrement préférée dans l'intervalle de 250 à 2.500 Daltons et/ou en particulier **en ce que** le rapport de la masse du poly(di)alkyle siloxane et du groupe modifiant (G1) est situé dans l'intervalle de 12 : 1 à 0,07 : 1, de préférence dans l'intervalle de 2 : 1 à 0,5 : 1 ;

(ii) groupe (G2) contenant des groupes polyesters, choisis parmi des groupes polyesters aliphatiques et/ou cycloaliphatiques et/ou aromatiques ou des groupes contenant ces groupes, de préférence avec au moins trois groupes

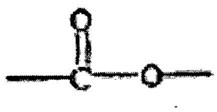

et/ou

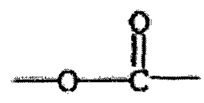

,

le groupe (G2) contenant les groupes polyesters présentant en particulier une masse molaire dans l'intervalle de 344 à 4.000 Daltons, de préférence dans l'intervalle de 500 à 2.000 Daltons, de façon particulièrement préférée dans l'intervalle de 500 à 1.500 Daltons, et/ou en particulier le rapport de la masse du poly(di)alkyle siloxane et du groupe modifiant (G2) étant situé dans l'intervalle de 1:5 à 1 :0,05, de préférence dans l'intervalle de 1 : 2 à 1 : 0,2 ;

(iii) groupe (G3) contenant les groupes arylalkyles, de préférence groupe phénylpropyle, en particulier groupe 2-phénylpropyle, ou un groupe contenant ce groupe ;
(iv) groupe (G4) contenant les groupes alkyles perfluorés, de préférence groupe alkyle perfluoré avec 3 à 8 atomes de carbone, et/ou groupe tétrahydroperfluoralkyle, en particulier groupe 1,1,2,2-tétrahydroperfluoralkyle, de préférence avec 3 à 8 atomes de carbone, ou un groupe contenant ce groupe.

**7.** Particules modifiées en surface selon l'une quelconque des revendications précédentes, **caractérisées en ce que** la proportion de l'agent modifiant s'élève à 0,01 à 50 % en poids, en particulier à 0,05 à 30 % en poids, de préférence à 0,1 à 15 % en poids, rapporté au poids total des particules modifiées en surface.

**8.** Particules modifiées en surface selon l'une quelconque des revendications précédentes, **caractérisées en ce que** les particules sont des particules à base inorganique avec des groupes réactifs à leur surface, en particulier avec des groupes réactifs de silane et/ou respectivement des groupes réactifs de siloxane, choisis de préférence parmi le groupe des groupes hydroxyles, des atomes d'halogène et des groupes contenant des atomes d'halogène, de façon particulièrement préférée des groupes hydroxyles, et/ou **en ce que** les particules sont des particules à base inorganique avec des groupes hydroxyles à leur surface.

**9.** Particules modifiées en surface selon l'une quelconque des revendications précédentes, **caractérisées en ce que** les particules consistent en au moins un oxyde, un hydroxyde et/ou un oxyhydroxyde d'au moins un métal ou d'un métalloïde ou encore de mélanges ou de combinaisons de tels composés, ou contiennent de tels composés, en particulier consistent en au moins un oxyde, un hydroxyde et/ou un oxyhydroxyde de l'aluminium, du silicium, du zinc et/ou du titane ou contiennent ces composés.

**10.** Particules modifiées en surface selon l'une quelconque des revendications précédentes, **caractérisées en ce que** les particules présentent des tailles de particules, en particulier déterminées par microscopie électronique à transmission, dans un intervalle de 0,1 à 1.000 nm, en particulier de 0,5 à 500 nm, de préférence de 1 à 350 nm, plus préférablement de 2 à 200 nm, encore plus préférablement en dessous de 100 nm, de façon particulièrement préférée en dessous de 50 nm.

**11.** Particules modifiées en surface selon l'une quelconque des revendications précédentes, **caractérisées en ce que** les particules sont modifiées en plus avec un silane de la formule somme générale
$\mathbf{R^6_{(4-x')}SiR^5_{x'}}$,
sachant que les symboles de la formule somme signifient :

- x' = 1 à 3, y compris les bornes ;
- $R^5$ = radical organique monovalent, linéaire ou ramifié ou cyclique, avec 1 à 18 atomes de carbone, de préférence 1 à 6 atomes de carbone, de façon particulièrement préférée 1 à 3 atomes de carbone ;
- $R^6$ = groupe hydroxyle ou groupe hydrolysable contenant ou consistant en :
  - un groupe alcoxyle linéaire ou ramifié ou cyclique avec 1 à 6 atomes de carbone, en particulier 1 à 2 atomes de carbone,
  - un atome d'halogène, en particulier un atome de chlore ou
  - un radical acide carboxylique avec 1 à 4 atomes de carbone, de préférence 2 atomes de carbone.

**12.** Particules modifiées en surface selon l'une quelconque des revendications précédentes, **caractérisées en ce que** les particules sont modifiées en plus avec un silane de la formule somme générale :

$$\mathbf{R^7_{(4-x'')}Si(R^8\text{-}R^9\text{-}R^{10})_{x''}}$$

sachant que les symboles de la formule somme signifient :

- x" = 1 à 3, y compris les bornes ;
- R7 = groupe hydroxyle ou groupe hydrolysable contenant ou consistant en :
  - un groupe alcoxyle linéaire ou ramifié ou cyclique avec 1 à 6 atomes de carbone, en particulier 1 à 2 atomes de carbone,
  - un atome d'halogène, en particulier un atome de chlore ou
  - un radical acide carboxylique avec 1 à 4 atomes de carbone, de préférence 2 atomes de carbone ;

• R8 = oxygène ou radical organique au moins divalent contenant ou consistant en :

- un radical alkylène linéaire ou ramifié, de préférence linéaire, en particulier avec 1 à 8 atomes de carbone,
- un éther d'alkylène,
- un thioéther d'alkylène,
- un polyéther d'alkylène, de préférence à base d'oxyde d'éthylène, d'oxyde de propylène, d'oxyde de butylène ou d'oxyde de styrène, ou de mélanges des oxydes, ou à base d'un polyéther statistique ou en masse,
- un polyéther d'arylène,
- un polyester d'alkylène ou
- un groupe organique aliphatique ou aromatique ou arylaliphatique, en particulier dans lequel le groupe, à côté de groupes esters et/ou éthers, contient aussi des groupes uréthanes et/ou urées ;

• R9 = radical organique divalent, en particulier avec une masse molaire dans l'intervalle de 130 à 5.000 Daltons, contenant ou consistant en :

- un groupe polyéther, de préférence contenant ou consistant en oxyde d'éthylène, en oxyde de propylène, en oxyde de butylène ou en oxyde de styrène, ou en mélanges de ces oxydes,
- un groupe polyester aliphatique et/ou cycloaliphatique et/ou aromatique, de préférence avec au moins trois groupes :

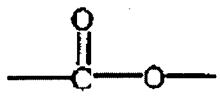

et/ou

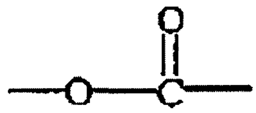

;

• $R^{10}$ = un groupe alkyle ou acétoxyle ou un radical -O-$R^{11}$, dans lequel $R^{11}$ est un groupe alkyle avec 1 à 18 atomes de carbone, ou un radical -CO-NH-$R^{12}$, dans lequel $R^{12}$ est un groupe alkyle avec 1 à 18 atomes de carbone.

**13.** Procédé de fabrication des particules modifiées en surface selon les revendications 1 à 12, dans lequel des particules, en particulier des particules à base inorganique avec des groupes réactifs sur leur surface, en particulier des groupes hydroxyles, et/ou des particules consistant en ou contenant des oxydes, des hydroxydes ou des oxyhydroxydes de métal et/ou de métalloïde, de préférence des nanoparticules, réagissent avec un agent modificateur basé polysiloxane, de préférence avec formation de liaisons chimiques, en particulier covalentes, **caractérisé en ce que** comme agent modificateur, un polysiloxane de la formule somme générale suivante :

$$(R^1_x R^2_{3-x} SiR^3)_y R^4$$

est utilisé, comme défini dans l'une des revendications précédentes.

**14.** Utilisation des particules modifiées en surface selon les revendications 1 à 12 comme charges.

**15.** Utilisation des particules modifiées en surface selon les revendications 1 à 12 dans des produits de revêtement et des systèmes de revêtement, en particulier des laques, des peintures et similaires, dans des dispersions de toute sorte, dans des plastiques, dans des matériaux expansés, dans des cosmétiques, en particulier des vernis à ongles, dans des colles et dans des mastics d'étanchéité.

**16.** Dispersions contenant des particules modifiées en surface selon les revendications 1 à 12 dans un milieu support ou dispersant.

**17.** Produits de revêtement et système de revêtement, en particulier laques, peintures et similaires, plastiques, matériaux expansés, cosmétiques, en particulier vernis à ongles, colles et mastics d'étanchéité contenant des particules modifiées en surface selon les revendications 1 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1236765 A1
- US 6593417 A
- US 5853809 A
- DE 19540623 A1
- EP 1304361 A1
- EP 0686676 A1
- EP 1614705 A1
- EP 1690902 A2
- EP 1690884 A1


### In der Beschreibung aufgeführte Nicht-Patentliteratur


- Marktprodukte NANOBYK-3600 bzw. NANOBYK-3601 der BYK-Chemie GmbH
- **NOLL.** Chemie und Technologie der Silicone. Wiley/VCH, 1984